# EUROPÄISCHE PATENTSCHRIFT

(11) **EP 1 856 166 B1**
(45) Veröffentlichungstag und Bekanntmachung des Hinweises auf die Patenterteilung: **16.12.2009**
(21) Anmeldenummer: 06708599.3
(22) Anmeldetag: 02.03.2006
(51) Int. Cl.: C08F 8/14, C08F 255/02, C09D 133/08, D06M 15/21, C09D 11/02, C14C 9/00, B01F 17/52, C08F 210/02, C08F 220/28, C08F 216/14

(54) **MODIFIZIERTE POLYOLEFINWACHSE**
MODIFIED POLYOLEFIN WAXES
CIRES AUX POLYOLEFINES MODIFIEES

(30) Priorität: 02.03.2005 DE 102005010109
(43) Veröffentlichungstag der Anmeldung: 21.11.2007
(73) Patentinhaber: BASF SE, 67056 Ludwigshafen (DE)
(72) Erfinder: HÄRING, Dietmar, 69198 Schriesheim (DE); HAUER, Bernhard, 67136 Fussgönheim (DE); PFEIFFER, Thomas, 67459 Böhl-iggelheim (DE); FECHTENKÖTTER, Andreas, 67063 Ludwigshafen (DE); LARBIG, Harald, 83022 Rosenheim (DE); BECK, Erich, 68526 Ladenburg (DE)
(86) Internationale Anmeldenummer: PCT/EP2006/060389
(87) Internationale Veröffentlichungsnummer: WO 2006/092425

(56) Entgegenhaltungen:
- EP-A1- 0 479 611
- EP-A1- 1 044 991
- EP-A1- 1 207 171
- WO-A-2004/042069
- EKMAN, KENNETH B. ET AL: "Preparation of ethylene copolymers containing pendant unsaturation for radiation crosslinking" JOURNAL OF APPLIED POLYMER SCIENCE , 48(1), 167-79 CODEN: JAPNAB; ISSN: 0021-8995, 1993, XP002417764 in der Anmeldung erwähnt

## Beschreibung

Die vorliegende Erfindung betrifft ein Verfahren zur Herstellung von (meth)acrylatgruppentragenden Polyolefinwachsen und deren Verwendung.

Polyolefin- und unter diesen insbesondere Polyethylenwachse sind bereits seit langem bekannt. Dabei handelt es sich um im wesentlichen lineare, zumeist keine funktionelle Gruppen tragende, hydrophobe Polymere. Eine Funktionalisierung solcher Polyolefinwachse ist jedoch sinnvoll, um die gewünschten Eigenschaften einzustellen.

Eine Funktionalisierung kann beispielsweise erfolgen durch Copolymerisation eines Comonomers, das eine entsprechende funktionelle Gruppe trägt, oder durch nachfolgende Modifizierung der Polyolefinwachse, beispielsweise durch Pfropfpolymerisation mit funktionelle Gruppen tragenden Monomeren.

Die vorliegende Erfindung betrifft ein Verfahren zur Herstellung von (meth)acrylatgruppentragenden Polyolefinwachsen, die beispielsweise zur Vernetzung eingesetzt werden sollen. Solche zu erhalten ist durch Copolymerisation oder nachträgliche Pfropfung nicht möglich, da die zugrundeliegenden Monomere mindestens zwei polymerisationsfähige Gruppen tragen würden und somit die Polyolefine vernetzen würden.

K. B. Ekman, J. J. Näsman und H. Sjöström beschreiben in J. Appl. Polym. Sc., 1993 (48), 167 - 179 die nachträgliche Modifizierung von Ethylen-Acrylsäure-Copolymeren mit Glycidylmethacrylat, von Ethylen-Hydroxyethylmethacrylat-Copolymeren mit Doppelbindungen aufweisenden Isocyanaten und von Ethylen-Vinylalkohol-Copolymeren mit Acrylsäure.

Nachteilig an der dort dargestellten Modifizierung ist, daß sie trotz der drastischen Reaktionsbedingungen (Temperatur 190 bis 200 °C) mit lediglich geringen Ausbeuten verläuft (höchstens 33% bei der Umsetzung mit Glycidylmethacrylat und höchstens 13% bei der Umsetzung mit Acrylsäure). Bei derartig hohen Reaktionstemperaturen besteht jedoch die Gefahr, daß die Acrylatgruppen polymerisieren oder zumindest zu stark gefärbten Produkten führen.

EP 479611 A1 beschreibt die Herstellung von vernetzbaren Ethylencopolymeren. Explizit offenbart wird in Beispiel 1 die Veresterung eines Ethen-Hydoxyethylmethacrylat-Copolymers mit Acrylsäure. Die Veresterung erfolgt unkatalysiert bei 180 °C.

Bei derartig hohen Reaktionstemperaturen besteht jedoch die Gefahr, daß die Acrylatgruppen polymerisieren oder zumindest zu stark gefärbten Produkten führen.

WO 02/85963 beschreibt die Möglichkeit Polyolefine mit bestimmten Schmelzenthalpien durch Pfropfung mit α,β-ungesättigten Carbonsäurederivaten zu modifizieren.

Innerhalb langer Listen werden unter anderem eine Propfmodifizierung mit Maleinsäureanhydrid oder Hydroxyalkylacrylat beschrieben. Explizit offenbart ist in den Beispielen jedoch lediglich eine Pfropfmodifizierung mit Maleinsäureanhydrid, wobei in einem nachfolgenden Schritt das Anhydrid mit Hydroxyalkylacrylat geöffnet wird.

Dies hat zwei Nachteile zur Folge, erstens erfordert die Modifizierung zwei Schritte, ausgehend vom Polyolefin, zunächst die Pfropfreaktion mit Maleinsäureanhydrid und dann die Öffnung des Anhydrids mit Hydroxyalkylacrylat, und zweitens verbleibt nach der Reaktion des Anhydrids mit dem Hydroxyalkylacrylat eine Carboxylatgruppe des Anhydrids unmodifiziert und stellt eine hydrophile Gruppe dar. Da bei Polyolefinwachsen jedoch zumeist die hydrophoben Eigenschaften gewünscht sind, beeinträchtigt eine zwangsläufig anfallende hydrophile Gruppe die angestrebten hydrophoben Eigenschaften des Produkts.

Die Herstellung von (Meth)acrylsäureestern erfolgt zumeist durch säure- oder basenkatalysierte Veresterung von (Meth)acrylsäure oder Umesterung von anderen (Meth)acrylsäureestern mit Alkoholen.

Bei basenkatalysierter Umesterung oder anderen Synthesen entstehen oft komplexe und bisweilen gefärbte Produktgemische. Zur Entfernung von Färbungen und unumgesetzten Reaktanden müssen die Produktgemische durch aufwendige alkalische Wäschen aufgearbeitet werden.

Die Herstellung von (Meth)acrylsäureestern durch eine enzymatische Ver- oder Umesterung ist bekannt.

Kumar und Gross beschreiben in J. Am. Chem. Soc. 2002, 124, 1850-1851 die Lipase-katalysierte Umsetzung von Isopropyliden-geschützten Zuckern durch Umsetzung mit Vinylmethacrylat. Eine vollständige Umsetzung wird erreicht durch das spezielle Edukt Vinylmethacrylat, da freigesetzter Vinylalkohol dem Reaktionsgleichgewicht als Acetaldehyd entzogen wird. Nachteilig an diesem Verfahren ist, daß Vinylmethacrylat als Spezialmonomer (aktiviertes Acrylat) teuer und kommerziell nur in kleinen Mengen verfügbar ist.

A. T. J. W. de Goede et al. beschreiben in Biocatalysis, 1994, 9, 145 - 155 die Umesterung von α-O-Octyl-Glucosid mit Ethylacrylat zum 6-O-Acrylester in Gegenwart von Lipasen. Nachteilig an diesem Verfahren ist, daß es auf Glucoside und glykosidische Bindungen beschränkt ist und empfindlich auf sterische Einflüsse im Glucosid reagiert.

Zudem wurden höher acrylierte Produkte infolge von unselektiven Nebenreaktionen erhalten.

EP-A1 999 229 beschreibt die enzymatische Ver- und Umesterung von Polyoxyalkylenen mit (Meth)Acrylsäure und (Meth)Acrylsäureestem.

Aus WO 03/042227 ist die Lipase-katalysierte Umesterung von Alkylacrylaten mit Zuckern bekannt.

Hajjar et al. beschreiben in Biotechnol. Lett. 1990, 12, 825-830 die enzymatische Umesterung von cyclischen und offenkettigen Alkandiolen mit Ethylacrylat mit einer Lipase aus *Chromobacterium viscosum.* Die Reaktionen laufen bei einem 18-fachen molaren Überschuß des Alkylacrylats gegenüber dem Diol in einem lösungsmittelfreien System ab. Es entstehen Mischungen aus Mono- und Diacrylaten.

WO 2004/42069 beschreibt die enzymatische Ver- oder Umesterung von hydroxygruppentragenden Polyacrylaten mit (Meth)Acrylsäure oder (Meth)Acrylsäureestern.

Polyacrylate stellen jedoch im Vergleich zu Polyolefinwachsen stark hydrophile Polymere dar, so daß nicht erwartet werden kann, daß eine derartige enzymatische Reaktion an hydrophilen Polymeren ohne weiteres auf hydrophobe Polymere übertragbar sein könnte, da Enzyme eine sehr hohe Substratspezifität, wie auch Enantio-, Regio- oder Chemoselektivität aufweisen.

Die Aufgabe der vorliegenden Erfindung war es, ein Verfahren zur Verfügung zu stellen, mit dem Polyolefinwachse mit polymerisierbaren Gruppen in hohen Umsätzen und hohen Selektivitäten modifiziert werden können. Die Synthese sollte unter milden Bedingungen ablaufen, so daß Produkte mit einer niedrigen Farbzahl und hoher Reinheit resultieren. Zudem soll auf den Einsatz aktivierter (Meth)Acrylsäurederivate, wie beispielsweise Monooxime oder Vinyl(meth)acrylat verzichtet werden.

Die Aufgabe wurde gelöst durch ein Verfahren zur Herstellung von (meth)acryloierten Polyolefinwachsen,
enthaltend als formale, copolymerisierte Aufbaukomponenten
a) 75 bis 99,9 mol% mindestens eines α-Olefins der Formel (I),

   R¹-CH=CH₂,

   worin R¹ Wasserstoff oder gegebenenfalls durch ein oder mehrere Sauerstoff- und/oder Schwefelatome und/oder ein oder mehrere substituierte oder unsubstituierte Iminogruppen unterbrochenes C₁ - C₁₈-Alkyl bedeutet,
b1) 0,1 bis 15 mol% mindestens eines Alkenyloxyalkyl (meth)acrylates und/oder Allyloxyalkyl (meth)acrylates
   und/oder
b2) 0,1 bis 25 mol% mindestens eines (Meth)acryloyloxyalkyl (meth)acrylates und/oder (Meth)acryloyloxyalkyl (meth)acrylamides sowie
c) gegebenenfalls 0 bis 25 mol% mindestens eines von a), b1) und b2) verschiedenen, mindestens eine funktionelle Gruppe tragenden Monomers
   jeweils in einpolymerisierter Form,
   umfassend die folgenden Schritte:
   (1) Herstellen eines Polyolefinwachses durch Copolymerisieren von
      A) mindestens einem Olefin der Formel (I),
      B1) mindestens einem Hydroxyalkyl alkenylether und/oder Hydroxyalkyl allylether und/oder
      B2) mindestens einem Hydroxyalkyl (meth)acrylat und/oder Hydroxyalkyl (meth)acrylamid sowie
      C) gegebenenfalls mindestens einem von A), B1) und B2) verschiedenen, mindestens eine funktionelle Gruppe tragenden Monomer,
   (2) gegebenenfalls Aufreinigen des erhaltenen Polyolefinwachses,
   (3) Verestern des aus (1) oder (2) erhaltenen Polyolefinwachses mit (Meth)Acrylsäure und/oder Umesterung mit (Meth)Acrylsäureester,
   (4) gegebenenfalls Aufreinigen des erhaltenen (meth)acrylierten Polyolefinwachses,
   in dem man die Ver- oder Umesterung in Gegenwart mindestens eines Enzyms durchführt.

"Formal" bedeutet dabei, daß die betreffenden Comonomere, insbesondere die zwei polymerisierbare Gruppen tragenden Monomere b1) und b2), nicht notwendigerweise in der angegebenen Form in die Copolymerisation eingesetzt werden, sondern durch gedankliche Abstraktion in das Copolymer eingebaut vorzustellen sind. Dies bedeutet insbesondere bei den Monomeren b1) und b2), daß lediglich eine der beiden polymerisierbaren Gruppen tatsächlich in das Copolymer eingebaut ist, und die andere polymerisierbare Gruppe im Polymer unverändert erhalten bleibt, wobei im Fall von Monomer b1) die einpolymerisierbare (Meth)acrylat-Gruppe unverändert bleibt.

Die scheinbar einfache Lösung, eine Verbindung mit zwei polymerisierbaren Gruppen als Comonomere einzusetzen, würde zur Vernetzung führen und somit zu einem starken Molmassenaufbau.

Mit Hilfe des erfindungsgemäßen Verfahrens ist die Herstellung (meth)acrylierter Polyolefinwachse in guter chemischer und Raum-Zeit-Ausbeute und unter milden Bedingungen mit guten Farbzahlen und unter Einsatz einfacher Ausgangsstoffe, nämlich (Meth)Acrylsäure und (Meth)Acrylsäureester, möglich.

Der Einsatz aktivierter (Meth)Acrylsäurederivate, wie z.B. Vinyl(meth)acrylat, ist nicht erforderlich.

(Meth)acrylsäure steht in dieser Schrift für Methacrylsäure und Acrylsäure, bevorzugt für Acrylsäure.

Bei den Monomeren a) handelt es sich um mindestens ein α-Olefin, ganz besonders bevorzugt um Ethylen.
Beispiele für α-Olefine sind solche der Formel (I)

R¹-CH=CH₂,

worin R¹ Wasserstoff oder gegebenenfalls durch ein oder mehrere Sauerstoff- und/oder Schwefelatome und/oder ein oder mehrere substituierte oder unsubstituierte Iminogruppen unterbrochenes C₁ - C₁₈-Alkyl bedeutet, bevorzugt Wasserstoff oder C₁ bis C₄-Alkyl, besonders bevorzugt Wasserstoff.

Bevorzugte α-Olefine sind Ethylen, Propylen, 1-Buten, *iso*-Buten, 1-Penten, 1-Hexen und 1-Octen, bevorzugt Ethylen, Propylen, *iso*-Buten, besonders bevorzugt Ethylen oder Propylen, ganz besonders bevorzugt Ethylen.

Bei den Monomeren b1) handelt es sich um mindestens ein Alkenyloxyalkyl(meth)-acrylat und/oder Allyloxyalkyl (meth)acrylat, bevorzugt um mindestens ein Alkenyloxyalkyl (meth)acrylat.

Dies sind beispielsweise solche der Formel (II) 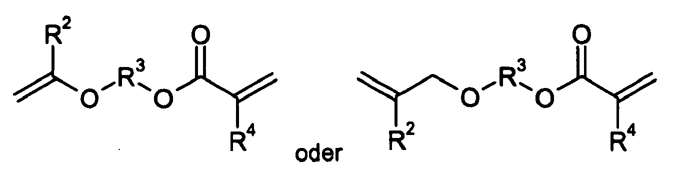 worin,
R² und R⁴ unabhängig voneinander Wasserstoff oder Methyl und
R³ gegebenenfalls durch Aryl, Alkyl, Aryloxy, Alkyloxy, Heteroatome und/oder Heterocyclen substituiertes C₂ bis C₂₀-Alkylen, C₅-C₁₂-Cycloakylen oder C₆-C₁₂-Arylen oder durch ein- oder mehrere Sauerstoff- und/oder Schwefelatome und/oder ein oder mehrere substituierte oder unsubstituierte Iminogruppen und/oder durch eine oder mehrere Cycloalkyl-, -(CO)-, -O(CO)O-, -(NH)(CO)O-, -O(CO)(NH)-, -O(CO)- oder -(CO)O-Gruppen unterbrochenes C₂-C₂₀-Alkylen
bedeuten.

Bei den Monomeren b2) handelt es sich um mindestens ein (Meth)acryloyloxyalkyl (meth)acrylat oder -(meth)acrylamid. Bevorzugt werden (Meth)acryloyloxyalkyl (meth)acrylate.

Beispiele für (Meth)acryloyloxyalkyl (meth)acrylate sind solche der Formel (III) 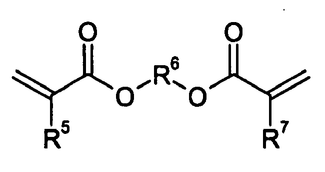 und für (Meth)acryloyloxyalkyl (meth)acrylamide solche der Formel (IIIa) 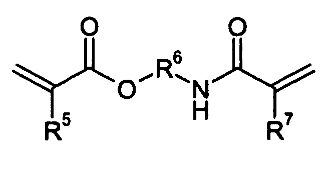 worin,
R⁵ und R⁷ unabhängig voneinander Wasserstoff oder Methyl und
R⁶ gegebenenfalls durch Aryl, Alkyl, Aryloxy, Alkyloxy, Heteroatome und/oder Heterocyclen substituiertes C₁ bis C₂₀-Alkylen, C₅-C₁₂-Cycloakylen oder C₆-C₁₂-Arylen oder durch ein- oder mehrere Sauerstoff- und/oder Schwefelatome und/oder ein oder mehrere substituierte oder unsubstituierte Iminogruppen und/oder durch eine oder mehrere Cycloalkyl-, -(CO)-, -O(CO)O-, -(NH)(CO)O-, -O(CO)(NH)-, -O(CO)- oder -(CO)O-Gruppen unterbrochenes C₂-C₂₀-Alkylen
bedeuten.

Monomere c) gegebenenfalls mindestens ein von a), b1) und b2) verschiedenes, mindestens eine funktionelle Gruppe tragendes Monomer.

Funktionelle Gruppen sind darin solche Atomgruppen, die andere Atome als Kohlenstoff oder Wasserstoff enthalten. Beispiel dafür sind Hydroxy-, un-, mono- oder disubstituierte Amino-, Mercapto-, Ether-, Carboxyl-, Sulfonsäure-, Phosphorsäure-, Phosphonsäure-, Carbonsäureamid-, Carbonsäureester-, Carbonsäureanhydrid-, Sulfonsäureester-, Phosphorsäureester-, Phosphonsäureester- oder Nitrilgruppen. Bevorzugt sind Hydroxy-, Amino-, Ether-, Carboxyl- und Carbonsäureestergruppen, besonders bevorzugt sind Ether-, Carboxyl- und Carbonsäureestergruppen.

Genannt als Monomere c) seien z.B. C₁-C₂₀-Alkyl(meth)acrylate, Vinylester von bis zu 20 C-Atomen enthaltenden Carbonsäuren, ethylenisch ungesättigte Nitrile, Vinylether von 1 bis 10 C-Atome enthaltenden Alkoholen und α,β-ungesättigte Carbonsäuren und deren Anhydride.

Als (Meth)acrylsäurealkylester bevorzugt sind solche mit einem C₁-C₁₀-Alkylrest, bevorzugt Methylmethacrylat, Methylacrylat, n-Butylacrylat, Ethylacrylat und 2-Ethylhexylacrylat.

Insbesondere sind auch Mischungen der (Meth)acrylsäurealkylester geeignet.

Vinylester von Carbonsäuren mit 1 bis 20 C-Atomen sind bevorzugt Vinyllaurat, Vinylstearat, Vinylpropionat und Vinylacetat.

α,β-Ungesättigte Carbonsäuren und deren Anhydride können beispielsweise sein Acrylsäure, Methacrylsäure, Fumarsäure, Crotonsäure, Itaconsäure, Maleinsäure oder Maleinsäureanhydrid, bevorzugt Acrylsäure.

Beispiele für Nitrile sind Acrylnitril und Methacrylnitril.

Geeignete Vinylether sind z.B. Vinylmethylether, Vinylisobutylether, Vinylhexylether und Vinyloctylether.

Weiterhin sind N-Vinylformamid, N-Vinylpyrrolidon sowie N-Vinylcaprolactam einsetzbar.

In den obigen Definitionen bedeuten
gegebenenfalls durch Aryl, Alkyl, Aryloxy, Alkyloxy, Heteroatome und/oder Heterocyclen substituiertes C₂-C₂₀-Alkylen beispielsweise 1,1-Ethylen, 1,2-Ethylen, 1,1-Propylen, 1,2-Propylen, 1,3-Propylen, 1,1-Butylen, 1,2-Butylen, 1,3-Butylen, 1,4-Butylen, 1,6-Hexylen, 2-Methyl-1,3-Propylen, 2-Ethyl-1,3-Propylen, 2,2-Dimethyl-1,3-Propylen, 2,2-Dimethyl-1,4-butylen,
gegebenenfalls durch Aryl, Alkyl, Aryloxy, Alkyloxy, Heteroatome und/oder Heterocyclen substituiertes C₁-C₂₀-Alkylen umfaßt zusätzlich noch Methylen,
gegebenenfalls durch Aryl, Alkyl, Aryloxy, Alkyloxy, Heteroatome und/oder Heterocyclen substituiertes C₅-C₁₂-Cycloalkylen beispielsweise Cyclopropylen, Cyclopentylen, Cyclohexylen, Cyclooctylen, Cyclododecylen,
gegebenenfalls durch Aryl, Alkyl, Aryloxy, Alkyloxy, Heteroatome und/oder Heterocyclen substituiertes, durch ein- oder mehrere Sauerstoff- und/oder Schwefelatome und/oder ein oder mehrere substituierte oder unsubstituierte Iminogruppen und/oder durch eine oder mehrere Cycloalkyl-, -(CO)-. -O(CO)O-, -(NH)(CO)O-, -O(CO)(NH)-, -O(CO)- oder -(CO)O-Gruppen unterbrochenes C₂-C₂₀-Alkylen beispielsweise 3-Oxa-1,5-pentylen, 3,6-Dioxa-1,8-octylen, 3,6,9-Trioxa-1,11-undecylen, 4-Oxa-1,7-heptylen, 4,8-Dioxa-1,11-undecylen, 4,8,12-Trioxa-1,15-pentadecylen, 5-Oxa-1,9-nonylen, 5,10-Dioxa-1,14-tetradecylen, 3-Oxa-2,5-dimethyl-1,5-pentylen, 3,6-Dioxa-2,5,8-trimethyl-1,8-octylen, 3-Oxa-1,4-dimethyl-1,5-pentylen und 3,6-Dioxa-1,4,7-trimethyl-1,8-octylen,
gegebenenfalls durch Aryl, Alkyl, Aryloxy, Alkyloxy, Heteroatome und/oder Heterocyclen substituiertes C₆-C₁₂-Arylen beispielsweise 1,2-, 1,3- oder 1,4-Phenylen, 4,4'-Biphenylen, Toluylen oder Xylylen und
C₁-C₁₈-Alkyl oder gegebenenfalls durch ein oder mehrere Sauerstoff- und/oder Schwefelatome und/oder ein oder mehrere substituierte oder unsubstituierte Iminogruppen unterbrochenes C₂ - C₁₈-Alkyl beispielsweise beispielsweise Methyl, Ethyl, Propyl, Isopropyl, n-Butyl, sec-Butyl, tert.-Butyl, Pentyl, Hexyl, Heptyl, Octyl, 2-Etylhexyl, 2,4,4-Trimethylpentyl, Decyl, Dodecyl, Tetradecyl, Hetadecyl, Octadecyl, 1,1-Dimethylpropyl, 1,1-Dimethylbutyl, 1,1,3,3-Tetramethylbutyl, Benzyl, 1-Phenylethyl, 2-Phenylethyl, α,α-Dimethylbenzyl, Benzhydryl, p-Tolylmethyl,1-(p-Butylphenyl)-ethyl, p-Chlorbenzyl, 2,4-Dichlorbenzyl, p-Methoxybenzyl, m-Ethoxybenzyl, 2-Cyanoethyl, 2-Cyanopropyl, 2-Methoxycarbonethyl, 2-Ethoxycarbonylethyl, 2-Butoxycarbonylpropyl, 1,2-Di-(methoxycarbonyl)-ethyl, 2-Methoxyethyl, 2-Ethoxyethyl, 2-Butoxyethyl, Diethoxymethyl, Diethoxyethyl, 1,3-Dioxolan-2-yl, 1,3-Dioxan-2-yl, 2-Methyl-1,3-dioxo-lan-2-yl, 4-Methyl-1,3-dioxolan-2-yl, 2-Isopropoxyethyl, 2-Butoxypropyl, 2-Octyloxy-ethyl, Chlormethyl, 2-Chlorethyl, Trichlormethyl, Trifluormethyl, 1,1-Dimethyl-2-chlor-ethyl, 2-Methoxyisopropyl, 2-Ethoxyethyl, Butylthiomethyl, 2-Dodecylthioethyl, 2-Phenylthioethyl, 2,2,2-Trifluorethyl, 2-Phenoxyethyl, 2-Phenoxypropyl, 3-Phenoxypropyl, 4-Phenoxybutyl, 6-Phenoxyhexyl, 2-Methoxyethyl, 2-Methoxypropyl, 3-Methoxypropyl, 4-Methoxybutyl, 6-Methoxyhexyl, 2-Ethoxyethyl, 2-Ethoxypropyl, 3-Ethoxypropyl, 4-Ethoxybutyl oder 6-Ethoxyhexyl, und bevorzugt Methyl, Ethyl, Propyl, Isopropyl, n-Butyl, sec-Butyl, tert.-Butyl, Pentyl, Hexyl, Heptyl, Octyl, 2-Etylhexyl, 2,4,4-Trimethylpentyl, Decyl, Dodecyl, Tetradecyl, Hetadecyl, Octadecyl, 1,1-Dimethylpropyl, 1,1-Dimethylbutyl, 1,1,3,3-Tetramethylbutyl, Benzyl, 1-Phenylethyl, 2-Phenylethyl, α,α-Dimethylbenzyl, Benzhydryl, p-Tolylmethyl, 1-(p-Butylphenyl)-ethyl, p-Chlorbenzyl, 2,4-Dichlorbenzyl, 2-Cyanoethyl, 2-Cyanopropyl, Chlormethyl, 2-Chlorethyl, Trichlormethyl, Trifluormethyl, 1,1-Dimethyl-2-chlorethyl und 2,2,2-Trifluorethyl.

Beispiele für R¹ sind Wasserstoff, Methyl, Ethyl, n-Propyl, *iso*-Propyl, n-Butyl, sek-Butyl, tert.-Butyl, n-Pentyl, n-Hexyl, n-Octyl, n-Decyl und n-Dodecyl.
Bevorzugt sind Wasserstoff, Methyl, Ethyl, n-Propyl, n-Butyl, n-Pentyl und n-Hexyl, besonders bevorzugt sind Methyl, Ethyl, n-Butyl und n-Hexyl, ganz besonders bevorzugt ist Methyl.

Beispiel für R² sind Wasserstoff und Methyl, bevorzugt Wasserstoff.

Beispiele für R³ sind 1,2-Ethylen, 1,2-Propylen, 1,3-Propylen, 1,2-Butylen, 1,3-Butylen, 1,4-Butylen, 1,6-Hexylen, 1,8-Octylen, 1,10-Decylen, 1,12-Dodecylen, 2-Methyl-1,3-Propylen, 2-Ethyl-1,3-Propylen, 2,2-Dimethyl-1,3-Propylen, 2,2-Dimethyl-1,4-butylen, 3-Oxa-1,5-pentylen, 3,6-Dioxa-1,8-octylen, 3,6,9-Trioxa-1,11-undecylen, 4-Oxa-1,7-heptylen, 4,8-Dioxa-1,11-undecylen, 4,8,12-Trioxa-1,15-pentadecylen, 5-Oxa-1,9-nonylen, 5,10-Dioxa-1,14-tetradecylen, 3-Oxa-2,5-dimethyl-1,5-pentylen, 3,6-Dioxa-2,5,8-trimethyl-1,8-octylen, 3-Oxa-1,4-dimethyl-1,5-pentylen und 3,6-Dioxa-1,4,7-trimethyl-1,8-octylen, 1,2- oder 1,3-Cyclopentylen, 1,2-, 1,3- oder 1,4-Cyclohexylen, Cyclooctylen oder Cyclododecylen.

Beispiel für R⁴ sind Wasserstoff und Methyl, bevorzugt Wasserstoff.

Beispiel für R⁵ sind Wasserstoff und Methyl, bevorzugt Wasserstoff.

Beispiele für R⁶ sind Methylen, 1,2-Ethylen, 1,2-Propylen, 1,3-Propylen, 1,2-Butylen, 1,3-Butylen, 1,4-Butylen, 1,6-Hexylen, 1,8-Octylen, 1,10-Decylen, 1,12-Dodecylen, 2-Methyl-1,3-Propylen, 2-Ethyl-1,3-Propylen, 2,2-Dimethyl-1,3-Propylen, 2,2-Dimethyl-1,4-butyten, 3-Oxa-1,5-pentyien, 3,6-Dioxa-1,8-octylen, 3,6,9-Trioxa-1,11-undecylen, 4-Oxa-1,7-heptylen, 4,8-Dioxa-1,11-undecylen, 4,8,12-Trioxa-1,15-pentadecylen, 5-Oxa-1,9-nonylen, 5,10-Dioxa-1,14-tetradecylen, 3-Oxa-2,5-dimethyl-1,5-pentylen, 3,6-Dioxa-2,5,8-trimethyl-1,8-octylen, 3-Oxa-1,4-dimethyl-1,5-pentylen und 3,6-Dioxa-1,4,7-trimethyl-1,8-octylen, 1,2- oder 1,3-Cyclopentylen, 1,2-, 1,3- oder 1,4-Cyclohexylen, Cyclooctylen oder Cyclododecylen.

Beispiel für R⁷ sind Wasserstoff und Methyl, bevorzugt Wasserstoff.

Bevorzugte Monomere b1) sind 2-Vinyloxy ethyl (meth)acrylat, 4-Vinyloxy butyl(meth)-acrylat, 6-Vinyloxy hexyl (meth)acrylat, 2-(Allyloxy)-ethyl (meth)acrylat, Polyethylenglykolmonoallylether mono (meth)acrylat, besonders bevorzugt ist 4-Vinyloxy butyl (meth)acrylat.

Bevorzugte Monomere b2) sind 2-(Meth)acryloyl ethyl (meth)acrylat, 4-(Meth)acryloyl butyl (meth)acrylat, 6-(Meth)acryloyl hexyl (meth)acrylat, 8-(Meth)acryloyl octyl (meth)-acrylat, 10-(Meth)acryloyl decyl (meth)acrylat, 12-(Meth)acryloyl dodecyl (meth)acrylat 2-(Meth)acryloylpropyl(meth)acrylat, Polypropylenglycoldi(meth)acrylat, Polyethylenglycoldi(meth)acrylat, N-(Meth)acryloylmethyl (meth)acrylamid.
Die erfindungsgemäßen b1)-haltigen Polyolefinwachse sind wie folgt zusammengesetzt (in mol%):
a) 75 bis 99,9, bevorzugt 80 bis 99,5, besonders bevorzugt 85 bis 99 mol%,
b1) 0,1 bis 15, bevorzugt 0,5 bis 15, besonders bevorzugt 1 bis 15 mol%,
c) 0 bis 25, bevorzugt 0 bis 15, besonders bevorzugt 0 bis 10, ganz besonders bevorzugt 0 bis 5 und insbesondere 0 mol%,
mit der Maßgabe, daß die Summe 100 mol% ergibt.

Die erfindungsgemäß herstellbaren b2)-haltigen Polyolefinwachse sind wie folgt zusammengesetzt (in mol%):
a) 75 bis 99,9, bevorzugt 80 bis 99,5, besonders bevorzugt 85 bis 99 mol%,
b2) 0,1 bis 25, bevorzugt 0,5 bis 20, besonders bevorzugt 1 bis 15 mol%,
c) 0 bis 25, bevorzugt 0 bis 15, besonders bevorzugt 0 bis 10, ganz besonders bevorzugt 0 bis 5 und insbesondere 0 mol%,
mit der Maßgabe, daß die Summe 100 mol% ergibt.

Erfindungsgemäß herstellbare Polyolefinwachse können auch sowohl b1) als auch b2) in den oben genannten Mengen enthalten.

Das zahlenmittlere Molekulargewicht Mₙ der erfindungsgemäß herstellbaren Polyolefinwachse beträgt bis zu 20.000, bevorzugt bis zu 18.000 und besonders bevorzugt bis zu 15.000 g/mol.

Das erfindungsgemäße Verfahren zur Herstellung der Polyolefinwachse umfaßt die folgenden Schritte:
(1) Herstellen eines Polyolefinwachses durch Copolymerisieren von
   A) mindestens einem Olefin der Formel (I),
   B1) mindestens einem Hydroxyalkyl alkenylether und/oder Hydroxyalkyl allylether und/oder
   B2) mindestens einem Hydroxyalkyl (meth)acrylat und/oder Hydroxyalkyl(methacrylamid sowie
   C) gegebenenfalls mindestens einem von A), B1) und B2) verschiedenen, mindestens eine funktionelle Gruppe tragenden Monomer,
(2) gegebenenfalls Aufreinigen des erhaltenen Polyolefinwachses,
(3) Verestern des aus (1) oder (2) erhaltenen Polyolefinwachses mit (Meth)Acrylsäure und/oder Umesterung mit (Meth)Acrylsäureester in Gegenwart mindestens eines Enzyms,
(4) gegebenenfalls Aufreinigen des erhaltenen (meth)acrylierten Polyolefinwachses.

Monomere A) sind die gleichen, wie sie oben als Monomere a) beschrieben sind.

Monomere C) können die gleichen sein, wie sie oben als Monomere c) beschrieben sind.

Bei den Monomeren B1) handelt es sich um mindestens einen Hydroxyalkyl alkenylether oder Hydroxyalkylallylether, bevorzugt um mindestens einen Hydroxyalkyl alkenylether.

Dies sind beispielsweise solche der Formel (IV) 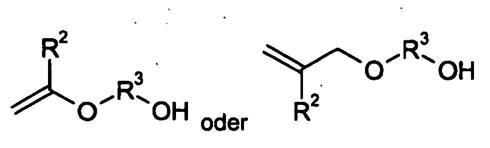 worin R² und R³ die oben genannten Bedeutungen haben.

Beispiele für Comonomere B1) sind 2-Hydroxyethyl vinylether, 2-Hydroxypropyl vinylether, 3-Hydroxypropyl vinylether, 4-Hydroxybutyl vinylether, 6-Hydroxyhexyl vinylether, Ethylenglykolmonoallylether, Polyethylenglykolmonoallylether, 4-Hydroxybutyl allylether, 6-Hydroxyhexyl allylether, Diethylenglykolmonoallylether, Propylenglykolmonoallylether, Dipropylenglykolmonoallylether, 1,3-Propandiolmonoallylether, Glycerinmonoallylether und Trimethylolpropanmonoallylether.

Bevorzugt ist 4-Hydroxybutyl vinylether.

Bei den Monomeren B2) handelt es sich um mindestens ein Hydroxyalkyl (meth)acrylat oder Hydroxyalkyl (meth)acrylamid, bevorzugt um mindestens ein Hydroxyalkyl (meth)acrylat.

Beispiele dafür sind solche der Formel (V) 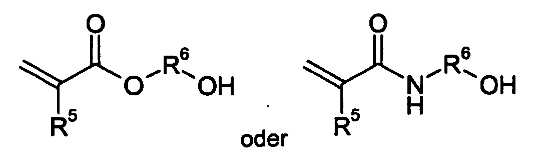 worin R⁵ und R⁶ die obigen Bedeutungen haben.

Beispiele für Comonomere B2) sind 2-Hydroxyethyl (meth)acrylat, 2-Hydroxypropyl (meth)acrylat, 3-Hydroxypropyl (meth)acrylat, 2-Hydroxybut-1-yl (meth)acrylat, 4-Hydroxybut-1-yl (meth)acrylat, 3-Hydroxybut-1-yl (meth)acrylat, 6-Hydroxyhex-1-yl (meth)-acrylat, 8-Hydroxyoct-1-yl (meth)acrylat, 3-Hydroxy-2,2-dimethyl propyl (meth)acrylat, 2-Ethyl-3-hydroxy-hex-1-yl (meth)acrylat, 2,4-Diethyl-5-hydroxy-oct-1-yl (meth)acrylat, Trimethylolpropan mono (meth)acrylat, Pentarythrit mono (meth)acrylat oder Glycerin mono (meth)acrylat Polypropylenglycolmono(meth)acrylat, Polyethylenglycolmono-(meth)acrylat, N-Methylolmethacrylamid (=N-(Hydroxymethyl)-methacrylamid)sowie N-(Hydroxymethyl)methacrylamid.

Bevorzugte Comonomere B2) sind 2-Hydroxyethyl (meth)acrylat, 2-Hydroxypropyl (meth)acrylat, 3-Hydroxypropyl (meth)acrylat, 4-Hydroxybut-1-yl (meth)acrylat und 6-Hydroxyhex-1-yl (meth)acrylat, besonders bevorzugt sind 2-Hydroxyethyl (meth)-acrylat und 2-Hydroxypropyl (meth)acrylat.

Die Zusammensetzung der B1)-haitigen Polyolefinwachse ist wie folgt (in mol%):
A) 75 bis 99,9, bevorzugt 80 bis 99,5, besonders bevorzugt 85 bis 99 mol%,
B1) 0,1 bis 15, bevorzugt 0,5 bis 15, besonders bevorzugt 1 bis 15 mol%,
C) 0 bis 25, bevorzugt 0 bis 15, besonders bevorzugt 0 bis 10, ganz besonders bevorzugt 0 bis 5 und insbesondere 0 mol%,
mit der Maßgabe, daß die Summe 100 mol% ergibt.

Die Zusammensetzung der B2)-haltigen Polyolefinwachse ist wie folgt (in mol%):
A) 75 bis 99,9, bevorzugt 80 bis 99,5, besonders bevorzugt 85 bis 99 mol%,
B2) 0,1 bis 25, bevorzugt 0,5 bis 20, besonders bevorzugt 1 bis 15 mol%,
C) 0 bis 25, bevorzugt 0 bis 15, besonders bevorzugt 0 bis 10, ganz besonders bevorzugt 0 bis 5 und insbesondere 0 mol%,
mit der Maßgabe, daß die Summe 100 mol% ergibt.

In das erfindirngsgemäße Verfahren können auch sowohl B1) als auch B2) in den oben genannten Mengen eingesetzt werden.

Die Herstellung des Polyolefinwachses erfolgt in der Regel wie folgt:
Die Herstellung der Polyolefinwachse nach dem erfindungsgemäßen Verfahren kann in gerührten Hochdruckautoklaven oder in Hochdruckrohrreaktoren erfolgen. Die Herstellung in gerührten Hochdruckautoklaven ist bevorzugt. Die für das erfindungsgemäße Verfahren angewandten gerührten Hochdruckautoklaven sind an sich bekannt, eine Beschreibung findet man in Ullmann's Encyclopedia of Industrial Chemistry, 5. Auflage, Stichworte: Waxes, Bd. A 28, S. 146 ff., Verlag Chemie Weinheim, Basel, Cambridge, New York, Tokio, 1996.

Bei ihnen verhält sich überwiegend das Verhältnis Länge : Durchmesser in Intervallen von 5 : 1 bis 30 : 1, bevorzugt 10 : 1 bis 20 : 1. Die gleichfalls anwendbaren Hochdruckrohrreaktoren findet man ebenfalls in Ullmann's Encyclopedia of Industrial Chemistry, 5. Auflage, Stichworte: Waxes, Bd. A 28, S. 146 ff., Verlag Chemie Weinheim, Basel, Cambridge, New York, Tokio, 1996.

Geeignete Druckbedingungen für die Polymerisation sind 500 bis 4.000 bar, bevorzugt 1.500 bis 2.500 bar. Die Reaktionstemperaturen liegen im Bereich von 170 bis 300 °C, bevorzugt im Bereich von 200 bis 280 °C.

Das erfindungsgemäße Verfahren kann man in Gegenwart eines Reglers durchführen. Als Regler verwendet man beispielsweise Wasserstoff oder einen aliphatischen Aldehyd oder ein aliphatisches Keton.

Beispiele sind Formaldehyd, Acetaldehyd, Propionaldehyd, n-Butyraldehyd, iso-Butyraldehyd, n-Valeraldehyd, iso-Valeraldehyd, Aceton, Ethylmethylketon, Diethylketon, iso-Butylmethylketon, Cyclohexanon, Cyclopentanon oder Cyclododecanon.

Die Verwendung von Propionaldehyd oder Ethylmethylketon als Regler ist ganz besonders bevorzugt.

Weitere sehr gut geeignete Regler sind alkylaromatische Verbindungen, beispielsweise Toluol, Ethylbenzol oder ein oder mehrere Isomere des Xylol.

Weitere gut geeignete Regler sind unverzweigte aliphatische Kohlenwasserstoffe wie beispielsweise Propan geeignet. Besonders gute Regler sind verzweigte aliphatische Kohlenwasserstoffe mit tertiären H-Atomen, beispielsweise Isobutan, Isopentan, Isooctan oder Isododekan (2,2,4,6,6-Pentamethylheptan). Ganz besonders geeignet ist Isododekan.

Die Menge an verwendetem Regler entspricht den für das Hochdruckpolymerisationsverfahren üblichen Mengen.

Als Starter für die radikalische Polymerisation können die üblichen Radikalstarter wie beispielsweise organische Peroxide, Sauerstoff oder Azoverbindungen eingesetzt werden. Auch Mischungen mehrerer Radikalstarter sind geeignet.

Als Radikalstarter verwendet man ein oder mehrere Peroxide, ausgewählt aus den kommerziell erhältlichen Substanzen Didekanoylperoxid, 2,5-Dimethyl-2,5-di(2-ethylhexanoylperoxy)hexan, tert.-Amylperoxy-2-ethylhexanoat, tert.-Amylperoxypivalat, Dibenzoylperoxid, tert.-Butylperoxy-2-ethylhexanoat, tert.Butylperoxydiethylacetat, tert.Butylperoxydiethylisobutyrat, 1,4-Di(tert.-butylperoxycarbo)-cyclohexan als Isomerengemisch, tert.-Butylperisononanoat 1,1-Di-(tert.-butyl-peroxy)-3,3,5-trimethylcyclohexan, 1,1-Di-(tert.-butylperoxy)-cyclohexan, Methyl-isobutylketonperoxid, tert.-Butylperoxyisopropylcarbonat, 2,2-Di-tert.-butylperoxybutan oder tert.-Butylperoxacetat; tert.-Butylperoxybenzoat, Di-tert.-amylperoxid, Dicumylperoxid, die isomeren Di-(tert.-butylperoxyisopropyl)benzole, 2,5-Dimethyl-2,5-di-tert.-butylper,oxyhexan, tert.-Butylcumylperoxid, 2,5-Dimethyl-2,5-di(tert.-butylperoxy)-hex-3-in, Di-tert.-butylperoxid, 1,3-Diisopropylmonohydroperoxid, Cumolhydroperoxid oder tert.-Bu- tylhydroperoxid; oder dimere oder trimere Ketonperoxide

Dimere oder trimere Ketonperoxide sowie Verfahren zu ihrer Herstellung sind aus EP-A 0 813 550 bekannt.

Als Peroxide sind Di-tert.-butylperoxid, tert.-Butylperoxypivalat, tert.-Amylperoxypivalat, tert.-Butylperoxyisononanoat oder Dibenzoylperoxid oder Gemische derselben besonders geeignet. Als Azoverbindung sei Azobisisobutyronitril ("AIBN") beispielhaft genannt. Die Radikalstarter werden in für Polymerisationen üblichen Mengen dosiert.

Das erfindungsgemäße Verfahren wird bevorzugt in Anwesenheit von Lösemitteln durchgeführt, wobei Mineralöle und andere Lösungsmittel, die in geringen Anteilen im erfindungsgemäßen Verfahren zugegen sind und beispielsweise zum Phlegmatisieren des oder der Radikalstarter verwendet wurden, im Sinne der vorliegenden Erfindung als Lösemittel für das erfindungsgemäße Verfahren gelten. Weitere Lösemittel sind beispielsweise aromatische Lösemittel. Besonders bevorzugte aromatische Kohlenwasserstoffe sind Toluol, Xylol-Isomere sowie Ethylbenzol.

Bevorzugt sind aromatische Kohlenwasserstoffe, (cyclo)aliphatische Kohlenwasserstoffe, Alkansäurealkylester, alkoxylierte Alkansäurealkylester und deren Gemische.

Besonders bevorzugt sind ein- oder mehrfach alkylierte Benzole und Naphthaline, Alkansäurealkylester und alkoxylierte Alkansäurealkylester sowie deren Gemische.

Als aromatische Kohlenwasserstoffgemische sind solche bevorzugt, die überwiegend aromatische C₇- bis C₁₄-Kohlenwasserstoffe umfassen und einen Siedebereich von 110 bis 300 °C umfassen können, besonders bevorzugt sind Toluol, o-, m- oder p-Xylol, Trimethylbenzolisomere, Tetramethylbenzolisomere, Ethylbenzol, Cumol, Tetrahydronaphthalin und solche enthaltende Gemische.

Beispiele dafür sind die Solvesso®-Marken der Firma ExxonMobil Chemical, besonders Solvesso® 100 (CAS-Nr. 64742-95-6, überwiegend C₉ und C₁₀-Aromaten, Siedebereich etwa 154 - 178 °C), 150 (Siedebereich etwa 182 - 207 °C) und 200 (CAS-Nr. 64742-94-5), sowie die Shellsol®-Marken der Firma Shell. Kohlenwasserstoffgemische aus Paraffinen, Cycloparaffinen und Aromaten sind auch unter den Bezeichnungen Kristallöl (beispielsweise Kristallöl 30, Siedebereich etwa 158 - 198 °C oder Kristallöl 60: CAS-Nr. 64742-82-1), Testbenzin (beispielsweise ebenfalls CAS-Nr. 64742-82-1) oder Solventnaphtha (leicht: Siedebereich etwa 155 - 180 °C, schwer: Siedebereich etwa 225 - 300 °C,) im Handel erhältlich. Der Aromatengehalt derartiger Kohlenwasserstoffgemische beträgt in der Regel mehr als 90 Gew%, bevorzugt mehr als 95, besonders bevorzugt mehr als 98 und ganz besonders bevorzugt mehr als 99 Gew%. Es kann sinnvoll sein, Kohlenwasserstoffgemische mit einem besonders verringerten Gehalt an Naphthalin einzusetzen.

Die Monomere werden üblicherweise gemeinsam oder getrennt dosiert. Das Mengenverhältnis bei der Dosierung entspricht üblicherweise nicht genau dem Verhältnis der Monomerbausteine in den erfindungsgemäßen Polyolefinwachse, weil Hydroxyalkyl alkenylether und -(Meth)acrylate B1) und B2) in der Regel leichter und schneller in die erfindungsgemäßen Polyolefinwachse eingebaut werden als Olefine, speziell Ethylen.

Die erfindungsgemäß hertellbaren Polyolefinwachse lassen sich vorzüglich dispergieren; insbesondere lassen sie sich im geschmolzenen Zustand besonders gut emulgieren. Ein Gegenstand der vorliegenden Erfindung sind daher Dispersionen, insbesondere wässrige Dispersionen, enthaltend die erfindungsgemäßen Polyolefinwachse.

Die Aufreinigung (2) der so erhaltenen Polyolefinwachse aus der Stufe (1) ist optional und kann gegebenenfalls erfolgen, indem man die Wachse mit Lösungsmittel wäscht und anschließend abfiltriert oder abzentrifugiert.

Zur Entfernung unumgesetzter Monomere kann auch eine Vakuumdestillation oder Strippung sinnvoll sein. Beispielsweise wird dazu in einem ersten Schritt die Hauptmenge der Monomere destillativ abgetrennt und der Rest der Monomere anschließend durch Strippen mit einem unter den Reaktionsbedingungen inerten Gas, bevorzugt einem sauerstoffhaltigen Gas, besonders bevorzugt Luft oder Luft-Stickstoff-Gemische, oder aber auch mit Kohlendioxid oder Wasserdampf.

In der Regel ist eine Aufreinigung nicht erforderlich und wird bevorzugt nicht durchgeführt.

Die Aufreinigung (4) der so erhaltenen (meth)acrylierten Polyolefinwachse aus der Stufe (3) ist optional und kann gegebenenfalls erfolgen, indem man nichtumgesetzte (Meth)Acrylsäure mit wäßrigen, gegebenenfalls schwach basischen Lösungen wäscht und anschließend abfiltriert, abzentrifugiert oder Phasen trennt.

Zur Entfernung unumgesetzter (Meth)Acrylsäure oder (Meth)Acrylsäureester kann auch eine Vakuumdestillation oder Strippung sinnvoll sein. Beispielsweise wird dazu in einem ersten Schritt die Hauptmenge der Monomere destillativ abgetrennt und der Rest der Monomere anschließend durch Strippen mit einem unter den Reaktionsbedingungen inerten Gas, bevorzugt einem sauerstoffhaltigen Gas, besonders bevorzugt Luft oder Luft-Stickstoff-Gemische, oder aber auch mit Kohlendioxid oder Wasserdampf.

In der Regel ist eine Aufreinigung sinnvoll und wird bevorzugt durchgeführt.

Es kann jedoch sinnvoll sein, nichtumgesetzte (Meth)Acrylsäure oder (Meth)Acrylsäureester im Reaktionsgemisch zu belassen, da diese, je nach geplanter Anwendung, in nachfolgenden Polymerisationen als Reaktivverdünner (siehe unten) fungieren können.

Die Temperatur bei einer Destillation oder Strippung beträgt in der Regel 80 - 160, bevorzugt 90 - 150 und besonders bevorzugt 90 - 120 °C, der entsprechende Druck bei einer Destillation 20 - 500, bevorzugt 50 - 300 und besonders bevorzugt 80 - 150 mbar. Eine Strippung wird zumeist bei normalem Druck durchgeführt.
Gegebenenfalls kann der Destillationsprozeß durch das Durchleiten eines unter den Reaktionsbedingungen im wesentlichen inerten Gasstromes wie oben beschrieben (Strippen), wie z.B. Stickstoff, aber auch ein sauerstoffhaltiges Gas, wie z.B. Luft oder Luft-Stickstoffgemische, insbesondere solche mit einem Sauerstoffgehalt von 0,1 bis zu 15 Vol%, bevorzugt von 0,5 bis zu 10 Vol% und ganz besonders bevorzugt solche Luft-Stickstoffgemische mit einem Sauerstoffgehalt von 1 bis 5 Vol%, unterstützt werden. Bevorzugt wird das Durchleiten des erfindungsgemäßen Spülgases mit dem Strippprozeß verbunden.

Die Ver- oder Umesterung im Reaktionsschritt (3) wird in Gegenwart eines Enzyms durchgeführt.

Im Reaktionsschritt (3) erfolgt die Veresterung mit (Meth)acrylsäure oder bevorzugt die Umesterung des hydroxyalkylgruppentragenden Polyolefinwachses mit mindestens einem, bevorzugt einem (Meth)acrylat (D) in Anwesenheit mindestens eines, bevorzugt eines die Ver- oder Umesterung katalysierenden Enzyms (E).

Verbindungen (D) können (Meth)acrylsäure oder Ester von (Meth)acrylsäure mit einem gesättigten Alkohol sein, bevorzugt gesättigte C₁ - C₁₀-Alkylester oder C₃ - C₁₂-Cycloalkylester der (Meth)acrylsäure, besonders bevorzugt gesättigte C₁ - C₄-Alkylester der (Meth)acrylsäure.

Gesättigt bedeutet im Rahmen dieser Schrift Verbindungen ohne C-C-Mehrfachbindungen (außer selbstverständlich die C=C-Doppelbindung in den (Meth)acryleinheiten).

Beispiele für Verbindungen (D) sind (Meth)acrylsäuremethyl-, -ethyl-, -n-butyl-, -*iso*-butyl-, n-octyl- und -2-Ethylhexylester, 1,2-Ethylenglycoldi- und -mono-(meth)acrylat, 1,4-Butandioldi- und -mono(meth)acrylat, 1,6-Hexandioldi- und -mono-(meth)acrylat, Trimethylolpropantri(meth)acrylat und Pentaerythrittetra(meth)acrylat.

Besonders bevorzugt sind (Meth)acrylsäuremethyl-, -ethyl-, -n-butyl- und -2-Ethylhexylester und ganz besonders bevorzugt (Meth)acrylsäuremethyl-, -ethyl- und -n-butylester.

Soweit die genannten Alkohole optisch aktiv sind werden sie bevorzugt racemisch oder als Diastereomerengemische eingesetzt, es ist jedoch auch möglich, sie als reine Enantiomere bzw. Diastereomere oder als Enantiomerengemische einzusetzen.

Die enzymatische Ver- oder Umesterung mit einem (Meth)acrylat erfolgt im Allgemeinen bei 0 bis 100°C, bevorzugt 20 bis 80 °C, besonders bevorzugt 20 bis 70°C, ganz besonders bevorzugt 20 bis 60 °C.

Erfindungsgemäß einsetzbare Enzyme (E) sind beispielsweise ausgewählt unter Hydrolasen (E.C. 3.-.-.-), und unter diesen besonders unter den Esterasen (E.C. 3.1.-.-), Lipasen (E.C. 3.1.1.3), Glykosylasen (E.C. 3.2.-.-) und Proteasen (E.C. 3.4.-.-) in freier oder auf einem Träger chemisch oder physikalisch immobilisierter Form, bevorzugt Lipasen, Esterasen oder Proteasen und besonders bevorzugt Esterasen (E.C. 3.1.-.-). Ganz besonders bevorzugt sind Novozyme 435 (Lipase aus *Candida antarctica* B) oder Lipase aus Alcaligenes sp., Aspergillus sp., Mucor sp., Penicilium sp., Geotricum sp., Rhizopus sp., Burkholderia sp., Candida sp., Pseudomonas sp., Thermomyces sp. oder Schweinepankreas, insbesondere bevorzugt sind Lipase aus *Candida antarctica* B oder aus Burkholderia sp.

Der Enzymgehalt im Reaktionsmedium liegt in der Regel im Bereich von etwa 0,1 bis 10 Gew.-%, bezogen auf das eingesetzten hydroxyalkylgruppentragende Polyolefinwachs.

Die Reaktionszeit hängt unter anderem von der Temperatur, der verwendeten Menge und der Aktivität des Enzymkatalysators und vom geforderten Umsatz ab sowie von der Art des hydroxyalkylgruppentragenden Polyolefinwachses. Bevorzugt wird die Reaktionszeit so angepaßt, daß der Umsatz der umzusetzenden, im hydroxyalkylgruppentragenden Polyolefinwachses enthaltenden Hydroxyfunktionen mindestens 70%, bevorzugt mindestens 80, besonders bevorzugt mindestens 90, ganz besonders bevorzugt mindestens 95 %, insbesondere mindestens 97 % und speziell mindestens 98 % beträgt. In der Regel sind dafür 1 bis 72 Stunden, bevorzugt 3 bis 36 und besonders bevorzugt 3 bis 24 Stunden ausreichend.

In einer alternativen Ausführungsform der Erfindung werden die im hydroxyalkylgruppentragenden Polyolefinwachs enthaltenen Hydroxyfunktionen lediglich teilweise umsetzt, beispielsweise zu 10 bis 80%, bevorzugt zu 15 bis 70%, besonders bevorzugt zu 20 bis 60%, ganz besonders bevorzugt zu 25 bis 55%, insbesondere zu 30 bis 50% und speziell zu 40 bis 50%. Derartige teilveresterte Polyolefinwachse sind mit besonderem Vorteil in der Dual-Cure-Härtung verwendbar (siehe unten).

In einem solchen Fall entsteht ein (meth)acryliertes Polyolefinwachs, enthaltend als formale, copolymerisierte Aufbaukomponenten
a) 75 bis 99,9 mol% mindestens eines α-Olefins der Formel (I),
b1) 0,1 bis 15 mol% mindestens eines Alkenyloxyalkyl (meth)acrylats und/oder Allyloxyalkyl (meth)acrylats sowie
B1) mindestens ein Hydroxyalkyl alkenylether und/oder Hydroxyalkyl allylether und/oder
b2) 0,1 bis 25 mol% mindestens eines (Meth)acryloyloxyalkyl (meth)acrylats und/oder (Meth)acryloyloxyalkyl (meth)acrylamids sowie
B2) mindestens ein Hydroxyalkyl (meth)acrylat und/oder Hydroxyalkyl(meth)acrylamid sowie
c) gegebenenfalls 0 bis 25 mol% mindestens eines von a), b1) und b2) verschiedenes, mindestens eine funktionelle Gruppe tragenden Monomers
jeweils in einpolymerisierter Form, das ebenfalls Gegenstand der vorliegenden Erfindung ist.

Das molare Verhältnis von (Meth)acrylsäureverbindung (D) (bezogen auf die (Meth)-acryleinheiten) zu dem hydroxyalkylgruppentragenden Polyolefinwachs (bezogen auf Hydroxygruppen) kann in einem weiten Bereich, wie z.B. im Verhältnis 100:1 bis 1:1, bevorzugt 50:1 bis 1:1, besonders bevorzugt 20:1 bis 1:1 und ganz besonders bevorzugt 10:1 bis 1:1, eingestellt werden.

Die Reaktion kann in organischen Lösungsmitteln oder deren Gemischen oder ohne Zusatz von Lösungsmitteln ablaufen. Bevorzugt wird kein Lösungsmittel zugesetzt. Die Ansätze sind in der Regel weitgehend wasserfrei (d.h. unter 10, bevorzugt unter 5, besonders bevorzugt unter 1 und ganz besonders bevorzugt unter 0,5 Vol% Wasserzusatz).

Geeignete organische Lösungsmittel sind solche für diese Zwecke bekannten, beispielsweise tertiäre Monoole, wie C₃-C₆-Alkohole, bevorzugt tert-Butanol, tert-Amylalkohol, Pyridin, Poly-C₁-C₄-alkylenglykoldi-C₁-C₄-alkylether, bevorzugt Polyethylenglycoldi-C₁-C₄-alkylether, wie z.B. 1,2-Dimethoxyethan, Diethylenglycoldimethylether, Polyethylenglycoldimethylether 500, Methyl-tert.Butylether, Ethyl-tert.Butylether, C₁-C₄-Alkylencarbonate, insbesondere Propylencarbonat, C₃-C₆-Alkylessigsäureester, insbesondere tert.-Butyl-essigsäureester, THF, Toluol, 1,3-Dioxolan, Aceton, *iso*-Butylmethylketon, Ethylmethylketon, 1,4-Dioxan, tert-Butylmethylether, Cyclohexan, Methylcyclohexan, Toluol, Hexan, Dimethoxymethan, 1,1-Dimethoxyethan, Acetonitril, sowie deren ein- oder mehrphasige Mischungen. Es kann vorteilhaft sein, freiwerdendes Wasser oder Alkohol durch ein möglichst nahe am Temperaturoptimum des verwendeten Enzyms siedendes binäres oder ternäres Heteroazeotrop abzutrennen. Der so entfernte Alkohol kann dann durch Phasenscheidung oder Membrandampftrennung entfernt werden.

Wahlweise können zu den organischen Lösungsmitteln wässrige Lösungsmittel zugesetzt werden, so dass - je nach organischem Lösungsmittel - ein- oder mehrphasige Reaktionslösungen entstehen. Beispiele für wässrige Lösungsmittel sind Wasser sowie wässrige, verdünnte (z.B. 10 bis 100mM) Puffer, beispielsweise mit einem pH-Wert im Bereich von etwa 6 bis 8, wie z.B. Kaliumphosphat- oder TRIS-HCl-Puffer.

Der Wasseranteil im Reaktionsansatz liegt in der Regel bei 0-10- Vol%. Bevorzugt werden die Reaktanden ohne Vorbehandlung (Trocknung, Wasserdotierung) eingesetzt.

Die Substrate liegen entweder gelöst, als Feststoffe suspendiert oder in Emulsion im Reaktionsmedium vor. Vorzugsweise liegt die anfängliche Konzentration der Reaktanden im Bereich von etwa 0,1 bis 20 Mol/l, insbesondere bei 0,15 bis 10 Mol/l oder 0,2 bis 5 mol/l liegt.

Die Reaktion kann kontinuierlich, beispielsweise in einem Rohrreaktor oder in einer Rührreaktorkaskade, oder diskontinuierlich erfolgen.

Die Umsetzung kann in allen für eine solche Umsetzung geeigneten Reaktoren durchgeführt werden. Solche Reaktoren sind dem Fachmann bekannt. Bevorzugt erfolgt die Umsetzung in einem Rührkesselreaktor oder einem Festbettreaktor.

Zur Durchmischung des Reaktionsansatzes können beliebige Verfahren eingesetzt werden. Spezielle Rührvorrichtungen sind nicht erforderlich. Das Reaktionsmedium kann ein- oder mehrphasig sein und die Reaktanden werden darin gelöst, suspendiert oder emulgiert, gegebenenfalls zusammen mit dem Molekularsieb vorgelegt und zum Start der Reaktion, sowie gegebenenfalls ein- oder mehrmals im Verlauf der Reaktion, mit dem Enzympräparat versetzt. Die Temperatur wird während der Reaktion auf den gewünschten Wert eingestellt und kann, falls gewünscht, während des Reaktionsverlauf erhöht oder verringert werden.

Wird die Reaktion im Festbettreaktor durchgeführt, so ist der Festbettreaktor bevorzugt mit immobilisierten Enzymen bestückt, wobei die Reaktionsmischung durch eine mit dem Enzym gefüllte Säule gepumpt wird. Es ist auch möglich, die Umsetzung im Wirbelbett durchzuführen, wobei das Enzym auf einem Träger immobilisiert eingesetzt wird. Die Reaktionsmischung kann kontinuierlich durch die Säule gepumpt werden, wobei mit der Fließgeschwindigkeit die Verweilzeit und damit der gewünschte Umsatz steuerbar ist. Es ist auch möglich, die Reaktionsmischung im Kreislauf durch eine Säule zu pumpen, wobei auch unter Vakuum der freigesetzte Alkohol gleichzeitig abdestilliert werden kann.

Die Entfernung von Wasser im Falle einer Veresterung oder Alkoholen, die bei einer Umesterung aus den Alkyl(meth)acrylaten freigesetzt werden, erfolgt kontinuierlich oder schrittweise in an sich bekannter Weise, z.B. durch Vakuum, azeotrope Entfernung, Absorption, Pervaporation und Diffusion über Membranen.

Hierzu eignen sich vorzugsweise Molekularsiebe oder Zeolithe (Porengröße z.B. im Bereich von etwa 3-10 Angström), eine Abtrennung durch Destillation oder mit Hilfe geeigneter semipermeabler Membranen.

Es ist aber auch möglich, das abgetrennte Gemisch aus Alkyl(meth)acrylat und dem diesem zugrundeliegenden Alkohol, das häufig ein Azeotrop bildet, direkt in eine Anlage zur Herstellung des Alkyl(meth)acrylats zuzuführen, um es dort in einer Veresterung mit (Meth)acrylsäure wiederzuverwerten.

Nach Beendigung der Reaktion kann man das aus der Ver- oder Umesterung erhaltene Reaktionsgemisch ohne weitere Aufreinigung weiterverwenden oder es erforderlichenfalls in einem weiteren Schritt aufreinigen.

In der Regel wird in einem Reinigungsschritt lediglich das eingesetzte Enzym vom Reaktionsgemisch abgetrennt und das Reaktionsprodukt vom gegebenenfalls verwendeten organischen Lösungsmittel abgetrennt.

Eine Abtrennung vom Enzym erfolgt in der Regel durch Filtration, Absorption, Zentrifugation oder Dekantieren. Das abgetrennte Enzym kann anschließend für weitere Reaktionen eingesetzt werden.

Die Abtrennung vom organischen Lösungsmittel erfolgt in der Regel durch Destillation, Rektifikation oder bei festen Reaktionsprodukten durch Filtration.

Zur weiteren Aufreinigung des Reaktionsproduktes kann auch eine Chromatographie durchgeführt werden.

Bevorzugt werden im Reinigungsschritt jedoch lediglich das eingesetzte Enzym und das gegebenenfalls eingesetzte Lösungsmittel abgetrennt.

Die Reaktionsbedingungen bei der enzymatischen Ver- oder Umesterung sind mild. Aufgrund der niedrigen Temperaturen und sonstigen milden Bedingungen wird die Bildung von Nebenprodukten während der Reaktion vermieden, die andernfalls zum Beispiel von chemischen Katalysatoren stammen können oder durch unerwünschte radikalische Polymerisation des eingesetzten (Meth)acrylats, die sonst nur durch Zugabe von Stabilisatoren verhindert werden kann.

Bei der erfindungsgemäßen Reaktionsführung kann der (Meth)acrylverbindung (D) über den ohnehin enthaltenen Lagerstabilisator hinaus zusätzliche Stabilisator zugegeben werden, beispielsweise Hydrochinonmonomethylether, Phenothiazin, Phenole, wie z.B. 2-tert.-Butyl-4-methylphenol, 6-tert.-Butyl-2,4-dimethyl-phenol oder N-Oxyle, wie 4-Hydroxy-2,2,6,6-tetramethyl-piperidin-N-oxyl, 4-Oxo-2,2,6,6-tetramethyl-piperidin-N-oxyl, beispielsweise in Mengen von 50 bis 2.000 ppm. Vorteilhaft wird die Ver- oder Umesterung in Gegenwart eines sauerstoffhaltigen Gases, bevorzugt Luft oder Luft-Stickstoff-Gemische, durchgeführt.

Bevorzugt kann jedoch bei der enzymatischen Ver- oder Umesterung auf Zugabe eines Stabilisators verzichtet werden.

Des weiteren kann der Enzymkatalysator unproblematisch vom Endprodukt entfernt werden.

Das Reaktionsgemisches kann gegebenenfalls falls gewünscht aufgereinigt werden, beispielsweise durch Filtration, Destillation, Rektifikation, Chromatographie, Behandlung mit Ionentauschern, Adsorbentien, neutraler, saurer und/oder alkalischer Wäsche, Strippen oder Kristallisation.

Die Farbzahl der erfindungsgemäß erhaltenen (meth)acryloierten Polyolefinwachse beträgt in der Regel unter 100 APHA gemäß DIN ISO 6271, bevorzugt unter 80, besonders bevorzugt unter 60, ganz besonders bevorzugt unter 40 und insbesondere unter 20 APHA.

Ein weiterer Gegenstand der vorliegenden Erfindung ist die Verwendung der erfindungsgemäß hergestellten Polyolefinwachse als
- Dispergiermittel für Pigmente,
- Gleitmittel, insbesondere für PVC-Polymere
- Mattierungsmittel für Lack,
- Oberflächenmittel für Druckfarben
- Lederbeschichtung,
- Textilbeschichtung oder
- n strahlungs- und/oder thermisch härtbaren Beschichtungsmassen.

Beschichtungen, die die erfindungsgemäß hergestellten Polyolefinwachse enthalten, weisen sehr hohe Kratzfestigkeiten, Härten, Chemikalienbeständigkeiten, angenehme Haptik, Elastizität und/oder Haftung, sowohl auf hydrophilen als auch auf hydrophoben Substraten auf.

Die erfindungsgemäß erhältlichen (meth)acryloierten Polyolefinwachse können vorteilhaft als Monomere oder Comonomere in Poly(meth)acrylaten oder als Reaktiwerdünner in thermisch-, strahlungs- und/oder Dual-Cure-härtbaren Poly(meth)acrylaten eingesetzt werden. Derartige Poly(meth)acrylate sind beispielsweise als Bindemittel in thermisch-, strahlungs- oder Dual-Cure-härtbaren Beschichtungsmitteln sowie in Klebstoffen, z.B. Acrylatklebstoffen geeignet sowie in Dichtungsmassen. Weiterhin sind die (meth)acryloierten Polyolefinwachse verwendbar in Polyurethanen, beispielsweise PU-Dispersionen, PU-Schäumen, PU-Klebstoffen und PU-Beschichtungen. Unter thermisch härtbar versteht man z.B., 1 K- und 2K-Lacksysteme, die noch zusätzlich mit vernetzenden Reagenzien, z.B. Melaminharze oder Isocyanatderivate, umgesetzt werden.

Ein weiterer Gegenstand der vorliegenden Anmeldung ist daher die Verwendung der nach dem erfindungsgemäßen Verfahren hergestellten (meth)acryloierten Polyolefinwachse als Reaktiwerdünner oder Bindemittel in Strahlen oder Dual-Cure-härtbaren Beschichtungsmassen, bevorzugt in Deckbeschichtungen, besonders bevorzugt in transparenten Klarlacken. Selbstverständlich können die erfindungsgemäß hergestellten (meth)acryloierten Polyolefinwachse auch als Monomere in Polymerisationen, gegebenenfalls zusammen mit anderen polymerisierbaren Monomeren, wie z.B. (Meth)acrylsäure, (Meth)acrylsäureester, Styrol, Butadien, Acrylnitril, Vinylacetat, N-Vinylpyrrolidon, 4-Hydroxybutylvinylether oder N-Vinylformamid, verwendet werden.

Unter "Dual-Cure" ist zu verstehen, dass die Beschichtungsmassen thermisch und mit aktinischer Strahlung härtbar sind. Im Rahmen der vorliegenden Erfindung ist unter aktinischer Strahlung elektromagnetische Strahlung wie sichtbares Licht, UV-Strahlung oder Röntgenstrahlung, insbesondere UV-Strahlung, und Korpuscularstrahlung wie Elektronenstrahlung zu verstehen.

Strahlenhärtbare Bindemittel sind solche, die mittels aktinischer Strahlung wie vorstehend definiert, insbesondere mittels UV-Strahlung härtbar sind.

Ein weiterer Gegenstand der vorliegenden Anmeldung sind Lackformulierungen, enthaltend die nach dem erfindungsgemäßen Verfahren erhältlichen (meth)acryloierten Polyolefinwachse. Dabei können die (meth)acryloierten Polyolefinwachse sowohl in Basislacken als auch in Decklacken eingesetzt werden. Aufgrund ihrer besonderen Eigenschaften, wie der Erhöhung der Kratzfestigkeit und Elastizität, sowie der Erniedrigung der Viskosität, insbesondere bei verzweigten Polyacrylaten, einer strahlengehärteten Klarlackbeschichtung, ist ihr Einsatz in Deckbeschichtungen bevorzugt.

Neben den (meth)acryloierten Polyolefinwachsen kann eine erfindungsgemäße strahlungshärtbare Masse noch folgende Komponenten enthalten:
(G) mindestens eine polymerisierbare Verbindung mit mehreren copolymerisierbaren, ethylenisch ungesättigten Gruppen,
(H) gegebenenfalls Reaktiwerdünner,
(I) gegebenenfalls Photoinitiator sowie
(J) gegebenenfalls weitere lacktypische Additive.

Als Verbindungen (G) kommen strahlungshärtbare, radikalisch polymerisierbare Verbindungen mit mehreren, d.h. mindestens zwei, copolymerisierbaren, ethylenisch ungesättigten Gruppen in Betracht.

Bevorzugt handelt es sich bei Verbindungen (G) um Vinylether- oder (Meth)acrylatverbindungen, besonders bevorzugt sind jeweils die Acrylatverbindungen, d.h. die Derivate der Acrylsäure.

Bevorzugte Vinylether- und (Meth)acrylat-Verbindungen (G) enthalten 2 bis 20, bevorzugt 2 bis 10 und ganz besonders bevorzugt 2 bis 6 copolymerisierbare, ethylenisch ungesättigte Doppelbindungen.

Besonders bevorzugt sind solche Verbindungen (G) mit einem Gehalt an ethylenisch ungesättigte Doppelbindungen von 0,1 - 0,7 mol /100 g, ganz besonders bevorzugt 0,2 - 0,6 mol / 100 g.

Das zahlenmittlere Molekulargewicht Mₙ der Verbindungen (G) liegt, wenn nicht anders angegeben, bevorzugt unter 15.000, besonders bevorzugt bei 300 - 12.000, ganz besonders bevorzugt bei 400 bis 5.000 und insbesondere bei 500 - 3.000 g/mol (bestimmt durch Gelpermeationschromatographie mit Polystyrol als Standard und Tetrahydrofuran als Elutionsmittel).

Als (Meth)acrylatverbindungen genannt seien (Meth)acrylsäureester und insbesondere Acrylsäureester sowie Vinylether von mehrfunktionellen Alkoholen, insbesondere solchen, die neben den Hydroxylgruppen keine weiteren funktionellen Gruppen oder allenfalls Ethergruppen enthalten. Beispiele solcher Alkohole sind z.B. bifunktionelle Alkohole, wie Ethylenglykol, Propylenglykol und deren höher kondensierte Vertreter, z.B. wie Diethylenglykol, Triethylenglykol, Dipropylenglykol, Tripropylenglykol etc., 1,2-, 1,3-oder 1,4-Butandiol, 1,5-Pentandiol, 1,6-Hexandiol, 3-Methyl-1,5-pentandiol, Neopentylglykol, alkoxylierte phenolische Verbindungen, wie ethoxylierte und/oder propoxylierte Bisphenole, 1,2-, 1,3- oder 1,4-Cyclohexandimethanol, trifunktionelle und höherfunktionelle Alkohole, wie Glycerin, Trimethylolpropan, Butantriol, Trimethylolethan, Pentaerythrit, Ditrimethylolpropan, Dipentaerythrit, Sorbit, Mannit und die entsprechenden alkoxylierten, insbesondere ethoxylierten und/oder propoxylierten Alkohole.

Die Alkoxylierungsprodukte sind in bekannter Weise durch Umsetzung der vorstehenden Alkohole mit Alkylenoxiden, insbesondere Ethylen- oder Propylenoxid, erhältlich. Vorzugsweise beträgt der Alkoxylierungsgrad je Hydroxylgruppe 0 bis 10, d.h. 1 mol Hydroxylgruppe kann mit bis zu 10 mol Alkylenoxiden alkoxyliert sein.

Als (Meth)acrylatverbindungen seien weiterhin Polyester(meth)acrylate genannt, wobei es sich um die (Meth)acrylsäureester oder Vinylether von Polyesterolen handelt, sowie Urethan-, Epoxid- oder Melamin(meth)acrylate.

Urethan(meth)acrylate sind z.B. erhältlich durch Umsetzung von Polyisocyanaten mit Hydroxyalkyl(meth)acrylaten und gegebenenfalls Kettenverlängerungsmitteln wie Diolen, Polyolen, Diaminen, Polyaminen oder Dithiolen oder Polythiolen.

Die Urethan(meth)acrylate haben vorzugsweise ein zahlenmittleres Molgewicht Mₙ von 500 bis 20.000, insbesondere von 750 bis 10.000 besonders bevorzugt 750 bis 3.000 g/mol (bestimmt durch Gelpermeationschromatographie mit Polystyrol als Standard).

Die Urethan(meth)acrylate haben vorzugsweise einen Gehalt von 1 bis 5, besonders bevorzugt von 2 bis 4 Mol (Meth)acrylgruppen pro 1.000 g Urethan(meth)acrylat.

Epoxid(meth)acrylate sind erhältlich durch Umsetzung von Epoxiden mit (Meth)acrylsäure. Als Epoxide in Betracht kommen z.B epoxidierte Olefine oder Glycidylether, z.B. Bisphenol-A-diglycidylether oder aliphatische Glycidylether, wie Butandioldiglycidether.

Melamin(meth)acrylate sind erhältlich durch Umsetzung von Melamin mit (Meth)acrylsäure oder deren Ester.

Die Epoxid(meth)acrylate und Melamin(meth)acrylate haben vorzugsweise ein zahlenmittleres Molgewicht Mₙ von 500 bis 20.000, besonders bevorzugt von 750 bis 10.000 g/mol und ganz besonders bevorzugt von 750 bis 3.000 g/mol; der Gehalt an (Meth)acrylgruppen beträgt vorzugsweise 1 bis 5, besonders bevorzugt 2 bis 4 pro 1.000 g Epoxid(meth)acrylat oder Melamin(meth)acrylat (bestimmt durch Gelpermeationschromatographie mit Polystyrol als Standard und Tetrahydrofuran als Elutionsmittel).

Weiterhin geeignet sind Carbonat(meth)acrylate, die im Mittel vorzugsweise 1 bis 5, insbesondere 2 bis 4, besonders bevorzugt 2 bis 3 (Meth)acrylgruppen und ganz besonders bevorzugt 2(Meth)acrylgruppen enthalten.

Das zahlungsmittlere Molekulargewicht Mₙ der Carbonat(meth)acrylate ist vorzugsweise kleiner 3.000 g/mol, besonders bevorzugt kleiner 1.500 g/mol, besonders bevorzugt kleiner 800 g/mol (bestimmt durch Gelpermeationschromatgtaphie mit Polystyrol als Standard, Lösemittel Tetrahydrofuran).

Die Carbonat(meth)acrylate sind in einfacher Weise erhältlich durch Umesterung von Kohlensäureestern mit mehrwertigen, vorzugsweise zweiwertigen Alkoholen (Diolen, z.B. Hexandiol) und anschließende Veresterung der freien OH-Gruppen mit (Meth)-acrylsäure oder auch Umesterung mit (Meth)acrylsäureestern, wie es z.B. in EP-A 92 269 beschrieben ist. Erhältlich sind sie auch durch Umsetzung von Phosgen, Harnstoffderivaten mit mehrwertigen, z.B. zweiwertigen Alkoholen.

Als Reaktivverdünner (Verbindungen (H)) kommen strahlungshärtbare, radikalisch oder kationisch polymerisierbare Verbindungen mit nur einer ethylenisch ungesättigten, copolymerisierbaren Gruppe in Betracht.

Genannt seien z.B. C₁-C₂₀-Alkyl(meth)acrylate, Vinylaromaten mit bis zu 20 C-Atomen, Vinylester von bis zu 20 C-Atomen enthaltenden Carbonsäuren, ethylenisch ungesättigte Nitrile, Vinylether von 1 bis 10 C-Atome enthaltenden Alkoholen, α,β-ungesättigte Carbonsäuren und deren Anhydride und aliphatischen Kohlenwasserstoffen mit 2 bis 8 C-Atomen und 1 oder 2 Doppelbindungen.

Als (Meth)acrylsäurealkylester bevorzugt sind solche mit einem C₁-C₁₀-Alkylrest, wie Methylmethacrylat, Methylacrylat, n-Butylacrylat, Ethylacrylat und 2-Ethylhexylacrylat.

Insbesondere sind auch Mischungen der (Meth)acrylsäurealkylester geeignet.

Vinylester von Carbonsäuren mit 1 bis 20 C-Atomen sind z.B. Vinyllaurat, Vinylstearat, Vinylpropionat und Vinylacetat.

α,β-Ungesättigte Carbonsäuren und deren Anhydride können beispielsweise sein Acrylsäure, Methacrylsäure, Fumarsäure, Crotonsäure, Itaconsäure, Maleinsäure oder Maleinsäureanhydrid, bevorzugt Acrylsäure.

Als vinylaromatische Verbindungen kommen z.B. Vinyltoluol, α-Butylstyrol, 4-n-Butylstyrol, 4-n-Decylstyrol und vorzugsweise Styrol in Betracht.

Beispiele für Nitrile sind Acrylnitril und Methacrylnitril.

Geeignete Vinylether sind z.B. Vinylmethylether, Vinylisobutylether, Vinylhexylether und Vinyloctylether.

Als nicht aromatische Kohlenwasserstoffe mit 2 bis 8 C-Atomen und einer oder zwei olefinischen Doppelbindungen seien Butadien, Isopren, sowie Ethylen, Propylen und Isobutylen genannt.

Weiterhin sind N-Vinylformamid, N-Vinylpyrrolidon sowie N-Vinylcaprolactam einsetzbar.

Als Photoinitiatoren (I) können dem Fachmann bekannte Photoinitiatoren verwendet werden, z.B. solche in "Advances in Polymer Science", Volume 14, Springer Berlin 1974 oder in K. K. Dietliker, Chemistry and Technology of UV- and EB-Formulation for Coatings, Inks and Paints, Volume 3; Photoinitiators for Free Radical and Cationic Polymerization, P. K. T. Oldring (Eds), SITA Technology Ltd, London, genannten.

In Betracht kommen z.B. Mono- oder Bisacylphosphinoxide Irgacure 819 (Bis(2,4,6-Trimethylbenzoyl)phenylphosphinoxid), wie sie z.B. in EP-A 7 508, EP-A 57 474, DE-A 196 18 720, EP-A 495 751 oder EP-A 615 980 beschrieben sind, beispielsweise 2,4,6-Trimethylbenzoyldiphenylphosphinoxid (Lucirin^{®} TPO), Ethyl-2,4,6-trimethylbenzoylphenylphosphinat, Benzophenone, Hydroxyacetophenone, Phenylglyoxylsäure und ihre Derivate oder Gemische dieser Photoinitiatoren. Als Beispiele seien genannt Benzophenon, Acetophenon, Acetonaphthochinon, Methylethylketon, Valerophenon, Hexanophenon, α-Phenylbutyrophenon, p-Morpholinopropiophenon, Dibenzosuberon, 4-Morpholinobenzophenon, 4-Morpholinodeoxybenzoin, p-Diacetylbenzol, 4-Aminobenzophenon, 4'-Methoxyacetophenon, β-Methylanthrachinon, *tert*-Butylanthrachinon, Anthrachinoncarbonysäureester, Benzaldehyd, α-Tetralon, 9-Acetylphenanthren, 2-Acetylphenanthren, 10-Thioxanthenon, 3-Acetylphenanthren, 3-Acetylindol, 9-Fluorenon, 1-Indanon, 1,3,4-Triacetylbenzol, Thioxanthen-9-on, Xanthen-9-on, 2,4-Dimethylthioxanthon, 2,4-Diethylthioxanthon, 2,4-Di-*iso*-propylthioxanthon, 2,4-Dichlorthioxanthon, Benzoin, Benzoin-*iso*-butylether, Chloroxanthenon, Benzointetrahydropyranylether, Benzoin-methylether, Benzoin-ethylether, Benzoin-butylether, Benzoin-*iso*-propylether, 7-H-Benzoin-methylether, Benz[de]anthracen-7-on, 1-Naphthaldehyd, 4,4'-Bis(dimethylamino)benzophenon, 4-Phenylbenzophenon, 4-Chlorbenzophenon, Michlers Keton, 1-Acetonaphthon, 2-Acetonaphthon, 1-Benzoylcyclohexan-1-ol, 2-Hydroxy-2,2-dimethylacetophenon, 2,2-Dimethoxy-2-phenylacetophenon, 2,2-Diethoxy-2-phenylacetophenon, 1,1-Dichloracetophenon, 1-Hydroxyacetophenon, Acetophenondimethylketal, o-Methoxybenzophenon, Triphenylphosphin, Tri-o-Tolylphosphin, Benz[a]anthracen-7,12-dion, 2,2-Diethoxyacetophenon, Benzilketale, wie Benzildimethylketal, 2-Methyl-1-[4-(methylthlo)phenyl]-2-morpholinopropan-1-on, Anthrachinone wie 2-Methylanthrachinon, 2-Ethylanthrachinon, 2-*tert*-Butylanthrachinon, 1-Chloranthrachinon, 2-Amylanthrachinon und 2,3-Butandion.

Geeignet sind auch nicht- oder wenig vergilbende Photoinitiatoren vom Phenylglyoxalsäureestertyp, wie in DE-A 198 26 712, DE-A 199 13 353 oder WO 98/33761 beschrieben.

Unter den genannten Photoinitiatoren sind Phosphinoxide, α-Hydroxyketone und Benzophenone bevorzugt.

Insbesondere können auch Gemische verschiedener Photoinitiatoren verwendet werden.

Die Photoinitiatoren können allein oder in Kombination mit einem Photopolymerisationspromotor, z.B. vom Benzoesäure-, Amin- oder ähnlichem Typ verwendet werden.

Als weitere lacktypische Additive (J) können beispielsweise Antioxidantien, Oxidationsinhibitoren, Stabilisatoren, Aktivatoren (Beschleuniger), Füllmittel, Pigmente, Farbstoffe, Entgasungsmittel, Glanzmittel, antistatische Agentien, Flammschutzmittel, Verdicker, thixotrope Agentien, Verlaufshilfsmittel, Bindemittel, Antischaummittel, Duftstoffe, oberflächenaktive Agentien, Viskositätsmodifikatoren, Weichmacher, Plastifizierer, klebrigmachende Harze (Tackifier), Chelatbildner oder Verträglichkeitsmittel (compatibilizer) verwendet werden.

Als Beschleuniger für die thermische Nachhärtung kann z.B. Zinnoctoat, Zinkoctoat, Dibutylzinnlaureat oder Diaza[2.2.2]bicyclooctan verwendet werden.

Weiterhin können ein oder mehrere photochemisch und/oder thermisch aktivierbare Initiatoren zugesetzt werden, z.B. Kaliumperoxodisulfat, Dibenzoylperoxid, Cyclohexanonperoxid, Di-tert.-Butylperoxid, Azobis-*iso*-butyronitril, Cyclohexylsulfonylacetylperoxid, Di-*iso*-propylpercarbonat, *tert*-Butylperoktoat oder Benzpinakol, sowie beispielsweise solche thermisch aktivierbare Initiatoren, die eine Halbwertszeit bei 80°C von mehr als 100 Stunden aufweisen, wie Di-t-Butylperoxid, Cumolhydroperoxid, Dicumylperoxid, t-Butylperbenzoat, silylierte Pinakole, die z. B. unter dem Handelsnamen AD-DID 600 der Firma Wacker kommerziell erhältlich sind oder Hydroxylgruppen-haltige Amin-N-Oxide, wie 2,2,6,6-Tetramethylpiperidin-N-oxyl, 4-Hydroxy-2,2,6,6-Tetramethylpiperidin-N-oxyl etc.

Weitere Beispiele geeigneter Initiatoren sind in "Polymer Handbook", 2. Aufl., Wiley & Sons, New York beschrieben.

Als Verdicker kommen neben radikalisch (co)polymerisierten (Co)Polymerisaten, übliche organische und anorganische Verdicker wie Hydroxymethylcellulose oder Bentonite in Betracht.

Als Chelatbildner können z.B. Ethylendiaminessigsäure und deren Salze sowie β-Diketone verwendet werden.

Geeignete Füllstoffe umfassen Silikate, z. B. durch Hydrolyse von Siliciumtetrachlorid erhältliche Silikate wie Aerosil^{®} der Fa. Degussa, Kieselerde, Talkum, Aluminiumsilikate, Magnesiumsilikate, Calciumcarbonate etc.

Geeignete Stabilisatoren umfassen typische UV-Absorber wie Oxanilide, Triazine und Benzotriazol (letztere erhältlich als Tinuvin^{®} -Marken der Ciba-Spezialitätenchemie) und Benzophenone. Diese können allein oder zusammen mit geeigneten Radikalfängern, beispielsweise sterisch gehinderten Aminen wie 2,2,6,6-Tetramethylpiperidin, 2,6-Di-tert.-butylpiperidin oder deren Derivaten, z. B. Bis-(2,2,6,6-tetra-methyl-4-piperidyl)sebacinat, eingesetzt werden. Stabilisatoren werden üblicherweise in Mengen von 0,1 bis 5,0 Gew.-%, bezogen auf die in der Zubereitung enthaltenen festen Komponenten, eingesetzt.

Weiterhin geeignete Stabilisatoren sind beispielsweise N-Oxyle, wie z.B. 4-Hydroxy-2,2,6,6-tetramethyl-piperidin-N-oxyl, 4-Oxo-2,2,6,6-tetramethyl-piperidin-N-oxyl, 4-Acetoxy-2,2,6,6-tetramethyl-piperidin-N-oxyl, 2,2,6,6-tetramethyl-piperidin-N-oxyl, 4,4',4"-Tris(2,2,6,6-tetramethyl-piperidin-N-oxyl)-phosphit oder 3-Oxo-2,2,5,5-tetramethyl-pyrrolidin-N-oxyl, Phenole und Naphthole, wie z.B. p-Aminophenol, p-Nitrosophenol, 2-*tert*.-Butylphenol, 4-*tert*.-Butylphenol, 2,4-di-*tert*.-Butylphenol, 2-Methyl-4-*tert*.-Butylphenol, 4-Methyl-2,6-*tert*.-Butylphenol (2,6-*tert*.-Butyl-p-Kresol) oder 4-*tert*.-Butyl-2,6-dimethylphenol, Chinone, wie z.B. Hydrochinon oder Hydrochinonmonomethylether, aromatische Amine, wie z.B. N,N-Diphenylamin, N-Nitroso-diphenylamin, Phenylendiamine, wie z.B. N,N'-Dialkyl-para-phenylendiamin, wobei die Alkylreste gleich oder verschieden sein können und jeweils unabhängig voneinander aus 1 bis 4 Kohlenstoffatome bestehen und geradkettig oder verzweigt sein können, Hydroxylamine, wie z.B. N,N-Diethylhydroxylamin, Harnstoffderivate, wie z.B. Harnstoff oder Thioharnstoff, phosphorhaltige Verbindungen, wie z.B. Triphenylphosphin, Triphenylphosphit oder Triethylphosphit oder schwefelhaltige Verbindungen, wie z.B. Diphenylsulfid oder Phenothiazin.

Typische Zusammensetzungen für strahlungshärtbare Massen sind beispielsweise
(Meth)acryloiertes Polyolefinwachs 20 - 100 Gew%, bevorzugt 40 - 90, besonders bevorzugt 50 - 90 und insbesondere 60 - 80 Gew%,
(G) 0 - 60 Gew%, bevorzugt 5 - 50, besonders bevorzugt 10 - 40 und insbesondere 10 - 30 Gew%,
(H) 0 - 50 Gew%, bevorzugt 5 - 40, besonders bevorzugt 6 - 30 und insbesondere 10 - 30 Gew%,
(I) 0 - 20 Gew%, bevorzugt 0,5 - 15, besonders bevorzugt 1 - 10 und insbesondere 2 - 5 Gew% sowie
(J) 0 - 50 Gew%, bevorzugt 2 - 40, besonders bevorzugt 3 - 30 und insbesondere 5 - 20 Gew%,
mit der Maßgabe, daß die Summe von (meth)acryloiertem Polyolefinwachs (G), (H), (I) und (J) zusammen 100 Gew% ergeben.

Die Beschichtung der Substrate erfolgt nach üblichen, dem Fachmann bekannten Verfahren, wobei man wenigstens eine Beschichtungsmasse auf das zu beschichtende Substrat in der gewünschten Stärke aufbringt und die gegebenenfalls enthaltenen flüchtigen Bestandteile der Bechichtungsmasse, gegebenenfalls unter Erhitzen, entfernt. Dieser Vorgang kann gewünschtenfalls ein- oder mehrfach wiederholt werden. Das Aufbringen auf das Substrat kann in bekannter Weise, z. B. durch Spritzen, Spachteln, Rakeln, Bürsten, Rollen, Walzen, Gießen, Laminieren, Hinterspritzen oder Coextrudieren erfolgen. Die Beschichtungsstärke liegt in der Regel in einem Bereich von etwa 3 bis 1.000 g/m² und vorzugsweise 10 bis 200 g/m².

Weiterhin wird ein Verfahren zum Beschichten von Substraten offenbart, bei dem man die Beschichtungsmasse auf das Substrat aufbringt und gegebenenfalls trocknet, mit Elektronenstrahlen oder UV Belichtung unter sauerstoffhaltiger Atmosphäre oder bevorzugt unter Inertgas härtet, gegebenenfalls bei Temperaturen bis zur Höhe der Trocknungstemperatur und anschließend bei Temperaturen bis zu 160°C, bevorzugt zwischen 60 und 160 °C, thermisch behandelt.

Das Verfahren zum Beschichten von Substraten kann auch so durchgeführt werden, daß nach dem Aufbringen der Beschichtungsmasse zunächst bei Temperaturen bis zu 160°C, bevorzugt zwischen 60 und 160 °C, thermisch behandelt und anschließend mit Elektronenstrahlen oder UV Belichtung unter Sauerstoff oder bevorzugt unter Inertgas gehärtet wird.

Die Härtung der auf dem Substrat gebildeten Filme kann gewünschtenfalls ausschließlich thermisch erfolgen. Im allgemeinen härtet man die Beschichtungen jedoch sowohl durch Bestrahlung mit energiereicher Strahlung als auch thermisch.

Die Härtung kann auch zusätzlich oder anstelle der thermischen Härtung durch NIR-Strahlung erfolgen, wobei als NIR-Strahlung hier elektromagnetische Strahlung im Wellenlängenbereich von 760 nm bis 2,5 µm, bevorzugt von 900 bis 1500 nm bezeichnet ist.

Gegebenenfalls kann, wenn mehrere Schichten des Beschichtungsmittels übereinander ausgetragen werden, nach jedem Beschichtungsvorgang eine thermische, NIR und/oder Strahlungshärtung erfolgen.

Als Strahlungsquellen für die Strahlungshärtung geeignet sind z.B. Quecksilber-Niederdruckstrahler, -Mitteldruckstrahler mit Hochdruckstrahler sowie Leuchtstoffröhren, Impulsstrahler, Metallhalogenidstrahler, Elektronenblitzeinrichtungen, wodurch eine Strahlungshärtung ohne Photoinitiator möglich ist, oder Excimerstrahler. Die Strahlungshärtung erfolgt durch Einwirkung energiereicher Strahlung, also UV-Strahlung oder Tageslicht, vorzugsweise Licht im Wellenlängenbereich von λ=200 bis 700 nm strahlt, besonders bevorzugt von λ=200 bis 500 nm und ganz besonders bevorzugt λ=250 bis 400 nm, oder durch Bestrahlung mit energiereichen Elektronen (Elektronenstrahlung; 150 bis 300 keV). Als Strahlungsquellen dienen beispielsweise Hochdruckquecksilberdampflampen, Laser, gepulste Lampen (Blitzlicht), Halogenlampen oder Excimerstrahler. Die üblicherweise zur Vernetzung ausreichende Strahlungsdosis bei UV-Härtung liegt im Bereich von 80 bis 3.000 mJ/cm².

Selbstverständlich sind auch mehrere Strahlungsquellen für die Härtung einsetzbar, z.B. zwei bis vier.
Diese können auch in jeweils unterschiedlichen Wellenlängebereichen strahlen.

Die Bestrahlung kann gegebenenfalls auch unter Ausschluß von Sauerstoff, z. B. unter Inertgas-Atmosphäre, durchgeführt werden. Als Inertgase eignen sich vorzugsweise Stickstoff, Edelgase, Kohlendioxid, oder Verbrennungsgase. Desweiteren kann die Bestrahlung erfolgen, indem die Beschichtungsmasse mit transparenten Medien abgedeckt wird. Transparente Medien sind z. B. Kunststofffolien, Glas oder Flüssigkeiten, z. B. Wasser. Besonders bevorzugt ist eine Bestrahlung in der Weise, wie sie in der DE-A1 199 57 900 beschrieben ist.

Ein weiterer Gegenstand der Erfindung ist ein Verfahren zur Beschichtung von Substraten, wobei man
i) ein Substrat mit einer Beschichtungsmasse, wie zuvor beschrieben, beschichtet,
ii) flüchtige Bestandteile der Beschichtungsmasse zur Filmbildung unter Bedingungen entfernt, bei denen der Photoinitiator (I) im wesentlichen noch keine freien Radikale ausbildet,
iii) gegebenenfalls den in Schritt ii) gebildeten Film mit energiereicher Strahlung bestrahlt, wobei der Film vorgehärtet wird, und anschließend gegebenenfalls den mit dem vorgehärteten Film beschichteten Gegenstand mechanisch bearbeitet oder die Oberfläche des vorgehärteten Films mit einem anderen Substrat in Kontakt bringt,
iv) dem Film thermisch oder mit NIR-Strahlung endhärtet

Dabei können die Schritte iv) und iii) auch in umgekehrter Reihenfolge durchgeführt, d. h. der Film kann zuerst thermisch oder per NIR-Strahlung und dann mit energiereicher Strahlung gehärtet werden.

Weiterhin sind auch Substrate, beschichtet mit einer erfindungsgemäßen Mehrschichtlackierung Gegenstand der vorliegenden Erfindung.

Die erfindungsgemäßen Beschichtungsmassen und Lackformulierungen eignen sich besonders zum Beschichten von Substraten wie Holz, Papier, Textil, Leder, Vlies, Kunststoffoberflächen, Glas, Keramik, mineralischen Baustoffen, wie Zement-Formsteine und Faserzementplatten, oder Metallen oder beschichteten Metallen, bevorzugt von Kunststoffen oder Metallen, die beispielsweise auch als Folien vorliegen können.

Die Dicke einer solche wie beschrieben zu härtenden Schicht kann von 0,1 µm bis mehrere mm betragen, bevorzugt von 1 bis 2.000 µm, besonders bevorzugt 5 bis 1.000 µm, ganz besonders bevorzugt von 10 bis 500 µm und insbesondere von 10 bis 250 µm.

Die erfindungsgemäß hergestellten (meth)acryloierten Polyolefinwachse können aufgrund ihrer geringeren Färbung vorteilhaft auch in einer thermisch induzierten (radikalischen) (Co)polymerisation eingesetzt werden.

Als Monomere, mit denen die erfindungsgemäß hergestellten (meth)acryloierten Polyolefinwachse beispielsweise copolymerisiert werden können seien genannt z.B. C₁-C₂₀-Alkyl(meth)-acrylate, Vinylaromaten mit bis zu 20 C-Atomen, Vinylester von bis zu 20 C-Atomen enthaltenden Carbonsäuren, ethylenisch ungesättigte Nitrile, Vinylether von 1 bis 10 C-Atome enthaltenden Alkoholen und aliphatischen Kohlenwasserstoffen mit 2 bis 8 C-Atomen und 1 oder 2 Doppelbindungen.

Als (Meth)acrylsäurealkylester bevorzugt sind solche mit einem C₁-C₁₀-Alkylrest, wie Methylmethacrylat, Methylacrylat, n-Butylacrylat, Ethylacrylat und verzweigte Alkylderivate wie 2-Ethylhexylacrylat.

Insbesondere sind auch Mischungen der (Meth)acrylsäurealkylester geeignet.

Vinylester von Carbonsäuren mit 1 bis 20 C-Atomen sind z.B. Vinyllaurat, Vinylstearat, Vinylpropionat und Vinylacetat.

Als vinylaromatische Verbindungen kommen z.B. Vinyltoluol, α-Butylstyrol, 4-n-Butylstyrol, 4-n-Decylstyrol und vorzugsweise Styrol in Betracht.

Beispiele für Nitrile sind Acrylnitril und Methacrylnitril.

Geeignete Vinylether sind z.B. Vinylmethylether, Vinylisobutylether, Vinylhexylether und Vinyloctylether.

Als nicht aromatische Kohlenwasserstoffe mit 2 bis 8 C-Atomen und einer oder zwei olefinischen Doppelbindungen seien Butadien, Isopren, sowie Ethylen, Propylen und Isobutylen genannt.

Eine häufige, aber nicht die einzige Methode zur Herstellung solcher (Co)Polymerisate ist die radikalische oder ionische (Co)Polymerisation in einem Lösungs- oder Verdünnungsmittel.

Die radikalische (Co)Polymerisation solcher Monomere erfolgt beispielsweise in wäßriger Lösung in Gegenwart von Polymerisationsinitiatoren, die unter Polymerisationsbedingungen in Radikale zerfallen, beispielsweise Peroxodisulfate, H₂O₂-Redoxysysteme oder Hydroxyperoxide, wie z.B. tert. Butylhydroperoxid oder Cumolhydroperoxid. Die (Co)Polymerisation kann in einem weiten Temperaturbereich, gegebenenfalls unter vermindertem oder auch unter erhöhtem Druck in der Regel bei Temperaturen bis zu 100 °C vorgenommen werden. Der pH-Wert des Reaktionsgemisches wird gewöhnlich in dem Bereich von 4 bis 10 eingestellt.

Die (Co)Polymerisation kann aber auch in anderer, dem Fachmann an sich bekannter Weise kontinuierlich oder diskontinuierlich durchgeführt werden, z.B. als Lösungs-, Fällungs-, Wasser-in-Öl-Emulsions-, inverse Emulsions, Suspensions oder umgekehrte Suspensionspolymerisation.

Dabei wird das Monomer/die Monomere unter Verwendung radikalischer Polymerisationsinitiatoren, z.B. in Radikale zerfallende Azoverbindungen, wie 2,2'-Azo-bis(iso-butyronitril), 2,2'-Azobis-(2-amidinopropan)-hydrochlorid oder 4,4'-Azo-bis-(4'-cyanpentansäure) oder Dialkylperoxide, wie Di-tert.-Amylperoxid, Aryl-alkylperoxide, wie tert.-Butyl-cumylperoxid, Alkyl-acylperoxide, wie tert.-Butyl-peroxy-2-ethylhexanoat, Peroxidicarbonate, wie Di-(4-tert.-Butylcyclohexyl)peroxydicarbonat oder Hydroperoxide (co)polymerisiert.

Die genannten Verbindungen werden meist in Form wäßriger Lösungen oder wäßriger Emulsionen eingesetzt, wobei die untere Konzentration durch die in der (Co)Polymerisation vertretbare Wassermenge und die obere Konzentration durch die Löslichkeit der betreffenden Verbindung in Wasser bestimmt ist.

Als Lösungs- oder Verdünnungsmittel können dienen z.B. Wasser, Alkohole, wie Methanol, Ethanol, n- oder iso-Propanol, n- oder iso-Butanol, oder Ketone, wie Aceton, Ethylmethylketon, Diethylketon oder *iso*-Butylmethylketon. Besonders bevorzugt sind unpolare Lösungsmittel wie beispielsweise Xylol und dessen Isomerengemische, Shellsol® A und Solventnaphtha.

In einer bevorzugten Ausführungsform werden die Monomere vorgemischt und Initiator mit gegebenenfalls weiteren Zusätzen gelöst in Lösungsmittel zugegeben. Eine besonders bevorzugte Ausführungsform ist beschrieben in WO 01/23484 und dort besonders auf Seite 10, Z. 3 bis Z. 24

Gegebenenfalls kann die (Co)Polymerisation in Gegenwart von Polymerisationsreglern, wie beispielsweise Hydroxylammoniumsalze, chlorierte Kohlenwasserstoffe und Thioverbindungen, wie z.B. tert.-Butylmercaptan, Thioglycolsäureethylacrylester, Mercaptoethynol, Mercaptopropyltrimethoxysilan, Dodecylmercaptan, tert.-Dodecylmercaptan oder Alkalimetallhypophosphite, durchgeführt werden. Bei der (Co)Polymerisation können diese Regler, z. B. in Mengen von 0 bis 0,8 Gew.-Teile, bezogen auf 100 Gew.-Teile der zu (co)polymerisierenden Monomeren, eingesetzt werden, durch die die Molmasse des entstehenden (Co)Polymers verringert wird.

Bei der Emulsionspolymerisation können Dispergiermittel, ionische und/oder nichtionische Emulgatoren und/oder Schutzkolloide bzw. Stabilisatoren als grenzflächenaktive Verbindungen verwendet werden.
Als solche kommen sowohl die zur Durchführung von Emulsionspolymerisationen üblicherweise eingesetzten Schutzkolloide als auch Emulgatoren in Betracht.

Geeignete Schutzkolloide sind beispielsweise Polyvinylalkohole, Cellulosederivate oder Vinylpyrrolidon enthaltende Copolymerisate. Eine ausführliche Beschreibung weiterer geeigneter Schutzkolloide findet sich in Houben-Weyl, Methoden der organischen Chemie, Band XIV/1, makromolekulare Stoffe, Georg-Thieme-Verlag, Stuttgart, 1969, S. 411 bis 420. Selbstverständlich können auch Gemische aus Emulgatoren und/oder Schutzkolloiden verwendet werden. Vorzugsweise werden als Dispergiermittel ausschließlich Emulgatoren eingesetzt, deren relative Molekulargewichte im Unterschied zu den Schutzkolloiden üblicherweise unter 1.000 liegen. Sie können sowohl anionischer, kationischer oder nichtionischer Natur sein. Selbstverständlich müssen im Falle der Verwendung von Gemischen granzflächenaktiver Substanzen die Einzelkomponenten miteinander verträglich sein, was im Zweifelsfall an Hand weniger Vorversuche überprüft werden kann. Im allgemeinen sind anionische Emulgatoren untereinander und mit nichtionischen Emulgatoren verträglich.

Desgleichen gilt auch für kationische Emulgatoren, während anionische und kationische Emulgatoren meistens miteinander unverträglich sind. Gebräuchliche Emulgatoren sind z.B. ethoxylierte Mono-, Di- und Tri-Alkylphenole (EO-Grad: 3 bis 100, : C₄ bis C₁₂ Alkylrest), ethoxylierte Fettalkohole (EO-Grad: 3 bis 100, Alkylrest: C₈ bis C₁₈), sowie Alkali- und Ammoniumsalze von Alkylsulfaten (Alkylrest: C₈ bis C₁₆) von Schwefelsäurehalbestem ethoxylierter Alkylphenole (EO-Grad: 3 bis 100, Alkylrest: C₄ bis C₁₂), von Alkylsulfonsäuren (Alkylrest: C₁₂ bis C₁₈) und von Alkylacrylsulfonsäuren (Alkylrest: C₉ bis C₁₈). Weitere geeignete Emulgatoren wie Sulfobemsteinsäureester finden sich in Houben-Weyl, Methoden der organischen Chemie, Band XIV/1, Makromolekulare Stoffe, Georg-Thieme Verlag, Stuttgart, 1961, Seiten 192 bis 208.

In der Regel beträgt die Menge an eingesetzten Dispergiermittel 0,5 bis 6, vorzugsweise 1 bis 3 Gew.-% bezogen auf die radikalisch zu polymerisierenden Monomeren.

Beispiele für (meth)acrylathaltige Dispersionen sind n-Butylacrylat/Acrylnitril - Dispersionen, die als Klebstoffe Anwendung finden, n-Butylacrylat/Butadien/Styrol-Dispersionen.

Die Polymerdispersionen, in denen erfindungsgemäßen (meth)acryloierten Polyolefinwachse verwendet werden, können zusätzlich chemisch und/oder physikalisch desodoriert werden.

Die mit den erfindungsgemäß hergestellten (meth)acryloierten Polyolefinwachse erhältlichen Copolymerisate weisen in der Regel eine geringere Farbzahl auf, was im Lackbereich vorteilhaft ist. Die beschriebenen Copolymerisate lassen sich dann in an sich bekannter Weise beispielsweise mit Aminoplasten, wie z.B. Melamin, zu vernetzten Lackharzen umsetzen, wie es beispielsweise beschrieben ist in der EP 738740 oder EP 675141.

Besonders bevorzugt eignen sich die erfindungsgemäßen Beschichtungsmassen als oder in Außenbeschichtungen, also solche Anwendungen, die dem Tageslicht ausgesetzt sind, bevorzugt von Gebäuden oder Gebäudeteilen, Innenbeschichtungen, Straßenmarkierungen, Beschichtungen auf Fahrzeugen und Flugzeugen. Insbesondere werden die Beschichtungen als Holz-, Papier- oder Kunststoffbeschichtungen, beispielsweise für Parkett oder Möbel eingesetzt.

Die folgenden Beispiele sollen die Eigenschaften der Erfindung erläutern, ohne sie aber einzuschränken.

### Beispiele

Als "Teile" seien in dieser Schrift, wenn nicht anders angegeben, "Gewichtsteile" verstanden.

### Abkürzungen

HBVE: Hydroxybutylvinylether
HEMA: Hydroxyethylmethacrylat
E: Ethylen
Novozym® 435: immobilisierte Lipase aus Candida antartica Typ B (Fa. Novozymes, Dänemark)

### Beispiel 1: Acryliertes Poly(ethylen-co-hydroxybutvlvinylether) mit 4,9 mol% HBVE

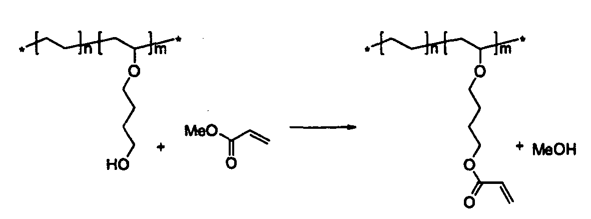

In einem 1 L-Vierhalskolben mit aufgesetztem KPG-Rührer und Rückflußkühler wurden 100,0 g Poly(ethylen-co-HBVE), enthaltend 4,9 mol% HBVE (OH-Zahl 86 mg/g, entsprechend 154 mmol OH-Gruppen), 500 ml Cyclohexan, 50,0 g Methylacrylat (580 mmol), 5,0 g Novozym® 435 und 20,0 g Molsieb (5 Å) für 24 h bei 60 °C gerührt. Die weißlich trübe Lösung wurde heiß über eine Filternutsche filtriert und mit Cyclohexan nachgewaschen. Das Filtrat wurde am Rotationsverdampfer bei 60 C / 6 mbar zur Trockene eingeengt. Man erhielt 112,3 g farbloses Wachs mit einer OH-Zahl von 24 mg/g, was einem Acrylierungsgrad der OH-Gruppen von 72 % entspricht.

### Beispiel 2: Acryliertes Poly(ethylen-co-hydroxybutylvinylether) mit 2,9 - 4,9 mol% HBVE

In einem Schraubdeckelglas wurden 5,0 g Poly(ethylen-co-HBVE) (siehe Tabelle), 5,0 g Methylacrylat, 50 ml Lösungsmittel (Toluol, Cyclohexan oder Methylacrylat; siehe Tabelle), 3,0 g Molsieb (5 Å) und 500 mg Novozym® 435 für 24 h bei 40 °C geschüttelt. Nach Filtration wurde der Acrylierungsgrad der OH-Gruppen über die OH-Zahl bestimmt.

| Gehalt HBVE im Polymer | Acrylierungsgrad [%] | | |
|---|---|---|---|
| [mol%] | Toluol | Cyclohexan | Methylacrylat |
| 2,9 | 61 | 68 | 52 |
| 3,8 | 70 | 74 | 54 |
| 4,9 | 80 | 85 | 71 |

### Beispiel 3: Acryliertes Poly(ethylen-co-hydroxybutylvinylether) mit 2,9 mol% HBVE

In einem Schraubdeckelglas wurden 5,0 g Poly(ethylen-co-HBVE) mit 2,9 mol% HBVE (entsprechend 5,0 mmol OH-Gruppen), 5,0 g Methylacrylat (58 mmol), 50 ml Cyclohexan, 3,0 g Molsieb 5 Å und 500 mg Enzym für 24 h bei 40 °C im Wasserbad geschüttelt. Nach Filtration wurde der Acrylierungsgrad über die OH-Zahl bestimmt.

| Immobilisierte Enzyme | Acrylierungsgrad [%] |
|---|---|
| Lipase aus Candida antarctica Typ B | 68 |
| Lipase aus Burkholderia sp. | 54 |
| Lipozym aus Mucor miehei | 50 |
| Lipozym aus Thermomyces lanuginosa | 39 |
| Lipase aus Alcaligenes sp. | 38 |
| Lipase aus Achromobacter sp. | 29 |
| Lipase aus Candida antartica Typ A | 27 |
| Subtilisin aus Bacillus licheniformis | 13 |

### Beispiel 4: Acryliertes Poly(ethylen-co-hydroxyethylmethacrylat) mit 10,7 mol% HEMA

### a) Herstellung von Poly(ethylen-co-hydroxyethylmethacrylat)

Die Herstellung von Poly(ethylen-co-hydroxyethylmethacrylat) erfolgte durch radikalische Polymerisation von Ethylen mit HEMA in einem gerührten 1 Liter Hochdruckautoklaven.

Hierzu wurde in einem kontinuierlichen Verfahren 12 kg/h Ethylen in einem ersten Kompressor zunächst auf 260 bar verdichtet. In diese Mitteldruckzone wurden 3,71 Liter/h einer Lösung aus HEMA und Toluol (1:1) sowie 2,4 Liter/h Propionaldehyd als Regler zur Einstellung der gewünschten Viskositäten hinzugefahren. In einem zweiten Kompressor wurde diese Mischung auf 1700 bar verdichtet und in den Hochdruckautoklaven gefahren. Die Initiierung der Polymerisation erfolgte durch Zugabe einer Lösung aus tert.-Butylperoxypivalat in Isododecan, welche mittels einer separaten Hochdruckpumpe ebenfalls bei 1700 bar in den Hochdruckautoklaven eingespeist wurde. Die Polymerisationstemperatur betrug 220°C. Als Austrag erhielt man das Ethylencopolymer mit 4,2 kg/h und einer Viskosität (dynamische Schmelzviskosität bei 120°C) von 60 mm²/s und einer Molmasse M_{w} von 1005 g/Mol (M_{w}/Mₙ = 2,75). Anhand der Molmassenverteilung gab es keinen Hinweis auf eine Vernetzung der OH-Gruppen mit Ester-Gruppen.

Die Zusammensetzung des Ethylencopolymers ergab laut ¹H-NMR 89,1 Mol-% (63,8 Gew.-%) einpolymerisiertes Ethylen und 10,7 Mol% (35,7 Gew.-%) einpolymerisiertes HEMA. Es konnte ein HEMA-Restmonomerenanteil von 0,2 Mol-% detektiert werden. Der Umsatz an Etylen betrug 22%, der von HEMA betrug 76%.

### b) Acrylierung von Poly(ethylen-co-hydroxyethylmethacrylat)

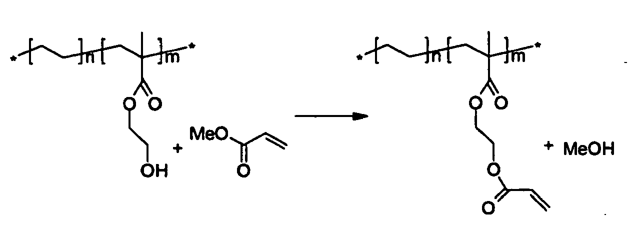

In einem 500 mL-Vierhalskolben mit aufgesetztem KPG-Rührer und Rückflußkühler wurden 100,0 g Poly(ethylen-co-HEMA) mit 10,7 mol% HEMA (OH-Zahl 158 mg/g, entsprechend 282 mmol OH-Gruppen), 60,0 g Methylacrylat (700 mmol), 12 mg Hydrochinonmonomethylether (200 ppm), 6,0 g Novozym® 435 und 60,0 g Molsieb-Pulver (5 Å) für 8 bzw. 24 h bei 60 °C gerührt. Die weißlich trübe Lösung wurde zur einfacheren Filtration mit 300 ml Toluol verdünnt, über eine Filternutsche das Enzym abfiltriert und mit Toluol nachgewaschen. Das Filtrat wurde am Rotationsverdampfer bei 60 °C / 10 mbar zur Trockene eingeengt. Man erhielt ein farbloses Wachs, dessen Acrylierungsgrad mittels OH-Zahl bestimmt wurde.

| Versuch Nr. | Reaktionszeit | OH-Zahl [mg/g] Anfang | OH-Zahl [mg/g] Ende | Umsatz [%] | Auswaage [g] |
|---|---|---|---|---|---|
| 1 | 8 h | 160 | 6 | 96 | 107 |
| 2 | 24 h | 160 | 7 | 96 | 108 |

### Beispiel 5: Acryliertes Poly(ethylen-co-hydroxyethylmethacrylat) mit 7,9 mol% HEMA unterschiedlicher Molmasse

| | |
|---|---|
| Polymer 1: | Poly(ethylen-co-hydroxyethylmethacrylat) mit 28,5 Gew% HEMA (=7,9 mol%), OH-Zahl 123 mg KOH/g und einer Viskosität von 60 mPas bei 120 °C |
| Polymer 2: | Poly(ethylen-co-hydroxyethylmethacrylat) mit 28,5 Gew% HEMA (=7,9 mol%), OH-Zahl 123 mg KOH/g und einer Viskosität von 1030 mPas bei 120 °C |

Polymer 2 hat bei gleicher Zusammensetzung eine höhere Molmasse als Polymer 1, erkennbar durch die höhere Viskosität.

In einem Schraubdeckelglas wurden 5,0 g Polymer 1 oder 2 (10,98 mmol OH-Gruppen), 3,0 g Methylacrylat (15,38 mmol), 10 ml Toluol, 100 mg Novozym® 435 und 3,0 g Molsieb-Kugeln 5 Å für 1, 6 oder 24 h bei 60 °C im Wasserbad geschüttelt. Eine Probe wurde filtriert, das Lösungsmittel und überschüssiges Methylacrylat im Vakuum entfernt und mittels H-NMR das Produkt charakterisiert sowie der Acrylierungsgrad bestimmt.

| Reaktionszeit | Acrylierungsgrad | [%] |
|---|---|---|
| | Polymer 1 | Polmer 2 |
| 24 h | 49 | 66 |
| 6 h | 33 | 43 |
| 6 h ohne Katalysator | 0 | 0 |
| 1 h | 23 | 20 |

### Beispiel 6: Acryliertes Poly(ethylen-co-hydroxyethylmethacrylat) mit 9,9 mol% HEMA (destillatives Verfahren)

| | |
|---|---|
| Polymer 3: | Poly(ethylen-co-hydroxyethylmethacrylat) mit 33,6 Gew% HEMA (=9,9 mol%), OH-Zahl 151 mg KOH/g und einer Viskosität von 60 mPas bei 120 °C |

In einem Rundkolben wurden 20,0 g Polymer 3 (53,8 mmol OH-Gruppen), 80 bzw. 160 g Methylacrylat (929 mmol), 1,0 g Novozym® 435 und je 20 mg Hydrochinonmonomethylether und Butylhydroxyanisol für 8 h bei den unten angegebenen Temperaturen und Vakuum gerührt. Das azeotrope Dampfgemisch aus Methanol und Methylacrylat wurde über ein Glasrohr in ein Rückflußkühler geleitet und kondensiert. Das Kondensat tropfte über 30 g Molsieb 5A, welches Methanol absorbiert, zurück in die Reaktionslösung.

Eine Probe wurde filtriert, H-NMR das Produkt charakterisiert sowie der Acrylierungsgrad bestimmt.

| Temperatur / Vakuum | Methylacrylat | Umsatz |
|---|---|---|
| 55 °C | 80 g | 83 % |
| 40 °C | 160 g | 70 % |
| 40 °C | 80 g | 71 % |

## Patentansprüche

1. Verfahren zur Herstellung von (meth)acryloierten Polyolefinwachsen, enthaltend als formale, copolymerisierte Aufbaukomponenten
a) 75 bis 99,9 mol% mindestens eines α-Olefins der Formel (I),
R¹-CH=CH₂,
worin R¹ Wasserstoff oder gegebenenfalls durch ein oder mehrere Sauerstoff- und/oder Schwefelatome und/oder ein oder mehrere substituierte oder unsubstituierte Iminogruppen unterbrochenes C₁ - C₁₈-Alkyl bedeutet,
b1) 0,1 bis 15 mol% mindestens eines Alkenyloxyalkyl (meth)acrylates und/oder Allyloxyalkyl (meth)acrylates
und/oder
b2) 0,1 bis 25 mol% mindestens eines (Meth)acryloyloxyalkyl (meth)acrylates und/oder (Meth)acryloyloxyalkyl (meth)acrylamides sowie
c) gegebenenfalls 0 bis 25 mol% mindestens eines von a), b1) und b2) verschiedenen, mindestens eine funktionelle Gruppe tragenden Monomers
jeweils in einpolymerisierter Form,
umfassend die folgenden Schritte:
(1) Herstellen eines Polyolefinwachses durch Copolymerisieren von
A) mindestens einem Olefin der Formel (I),
B1) mindestens einem Hydroxyalkyl alkenylether und/oder Hydroxyalkyl allylether und/oder
B2) mindestens einem Hydroxyalkyl (meth)acrylat und/oder Hydroxyalkyl (meth)acrylamid sowie
C) gegebenenfalls mindestens einem von A), B1) und B2) verschiedenen, mindestens eine funktionelle Gruppe tragenden Monomer,
(2) gegebenenfalls Aufreinigen des erhaltenen Polyolefinwachses,
(3) Verestern des aus (1) oder (2) erhaltenen Polyolefinwachses mit (Meth)Acrylsäure und/oder Umesterung mit (Meth)Acrylsäureester,
(4) gegebenenfalls Aufreinigen des erhaltenen (meth)acrylierten Polyolefinwachses,
**dadurch gekennzeichnet, daß** man die Ver- oder Umesterung in Gegenwart mindestens eines Enzyms durchführt.

2. Verfahren gemäß Anspruch 1, **dadurch gekennzeichnet, daß** das Olefin A) ausgewählt ist aus der Gruppe bestehend aus Ethylen, Propylen, 1-Buten, iso-Buten, 1-Penten, 1-Hexen und 1-Octen.

3. Verfahren gemäß Anspruch 1 oder 2, **dadurch gekennzeichnet, daß** das Monomer B1) ein Hydroxyalkyl alkenylether oder Hydroxyalkylallylether ist der Formel (IV) 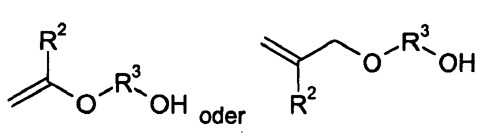 worin
R² Wasserstoff oder Methyl und
R³ gegebenenfalls durch Aryl, Alkyl, Aryloxy, Alkyloxy, Heteroatome und/oder Heterocyclen substituiertes C₂ bis C₂₀-Alkylen, C₅-C₁₂-Cycloakylen oder C₆-C₁₂-Arylen oder durch ein- oder mehrere Sauerstoff- und/oder Schwefelatome und/oder ein oder mehrere substituierte oder unsubstituierte Iminogruppen und/oder durch eine oder mehrere Cycloalkyl-, -(CO)-, -O(CO)O-, -(NH)(CO)O-, -O(CO)(NH)-, -O(CO)- oder -(CO)O-Gruppen unterbrochenes C₂-C₂₀-Alkylen
bedeuten.

4. Verfahren gemäß Anspruch 1 oder2, **dadurch gekennzeichnet, daß** das Monomer B2) ein Hydroxyalkyl (meth)acrylat oder Hydroxyalkyl (meth)acrylamid ist der Formel (V) 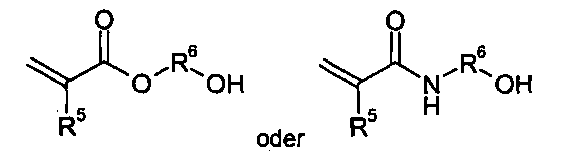 worin,
R⁵ Wasserstoff oder Methyl und
R⁶ gegebenenfalls durch Aryl, Alkyl, Aryloxy, Alkyloxy, Heteroatome und/oder Heterocyclen substituiertes C₁ bis C₂₀-Alkylen, C₅-C₁₂-Cycloakylen oder C₆-C₁₂-Arylen oder durch ein- oder mehrere Sauerstoff- und/oder Schwefelatome und/oder ein oder mehrere substituierte oder unsubstituierte Iminogruppen und/oder durch eine oder mehrere Cycloalkyl-, -(CO)-, -O(CO)O-, -(NH)(CO)O-, -O(CO)(NH)-, -O(CO)- oder -(CO)O-Gruppen unterbrochenes C₂-C₂₀-Alkylen
bedeuten.

5. Verfahren gemäß einem der vorstehenden Ansprüche, **dadurch gekennzeichnet, daß** das Monomer C) ausgewählt ist aus der Gruppe bestehend aus C₁-C₂₀-Alkyl(meth)acrylate, Vinylester von bis zu 20 C-Atomen enthaltenden Carbonsäuren, ethylenisch ungesättigte Nitrile, Vinylether von 1 bis 10 C-Atome enthaltenden Alkoholen und α,β-ungesättigte Carbonsäuren und deren Anhydride.

6. Verfahren gemäß einem der vorstehenden Ansprüche, **dadurch gekennzeichnet, daß** man die enzymatische Ver- oder Umesterung in Gegenwart mindestens eine Polymerisationsinhibitors bei 0 - 100 °C und einer Reaktionszeit von 1 - 72 Stunden durchführt.

7. Verfahren gemäß einem der vorstehenden Ansprüche, **dadurch gekennzeichnet, daß** man 10 bis 80% der im hydroxyalkylgruppentragenden Polyolefinwachs enthaltenen Hydroxyfunktionen ver- oder umestert.

8. Verfahren gemäß einem der Ansprüche 1 bis 6, **dadurch gekennzeichnet, daß** man mindestens 80% der im hydroxyalkylgruppentragenden Polyolefinwachs enthaltenen Hydroxyfunktionen ver- oder umestert.

9. Verwendung von Polyolefinwachsen erhalten gemäß einem der Ansprüche 1 bis 8 als Dispergiermittel für Pigmente, Gleitmittel, insbesondere für PVC-Polymere, Mattierungsmittel für Lack, Oberflächenmittel für Druckfarben, Lederbeschichtung, Textilbeschichtung oder in strahlungs- und/oder thermisch härtbaren Beschichtungsmassen.

10. Beschichtungsmasse, enthaltend (meth)acryloierte Polyolefinwachse erhalten gemäß einem der Ansprüche 1 bis 8, sowie folgende Komponenten:
(G) mindestens eine polymerisierbare Verbindung mit mehreren copolymerisierbaren, ethylenisch ungesättigten Gruppen,
(H) gegebenenfalls Reaktiwerdünner,
(I) gegebenenfalls Photoinitiator sowie
(J) gegebenenfalls weitere lacktypische Additive.

## Claims

1. A process for preparing (meth)acrylated polyolefin waxes comprising as formal, copolymerized formulative components
a) from 75 to 99.9 mol% of at least one *α*-olefin of the formula (I),
R¹-CH=CH₂,
where R¹ is hydrogen or C₁-C₁₈-alkyl which is optionally interrupted by one or more oxygen and/or sulfur atoms and/or one or more substituted or unsubstituted imino groups,
b1) from 0.1 to 15 mol% of at least one alkenyloxyalkyl (meth)acrylate and/or allyloxyalkyl (meth)acrylate
and/or
b2) from 0.1 to 25 mol% of at least one (meth)acryloyloxyalkyl (meth)acrylate and/or (meth)acryloyloxyalkyl (meth)acrylamide and
c) if appropriate, from 0 to 25 mol% of at least one monomer which is different from a), b1) and b2) and bears at least one functional group,
in each case in polymerized form,
which comprises the following steps:
(1) preparation of a polyolefin wax by copolymerization of
A) at least one olefin of the formula (I),
B1) at least one hydroxyalkyl alkenyl ether and/or hydroxyalkyl allyl ether and/or
B2) at least one hydroxyalkyl (meth)acrylate and/or hydroxyalkyl-(meth)acrylamide and
C) if appropriate, at least one monomer which is different from A), B1) and B2) and bears at least one functional group,
wherein the esterification or transesterification is carried out in the presence of at least one enzyme.
(2) if appropriate, purification of the polyolefin wax obtained,
(3) esterification of the polyolefin wax obtained from (1) or (2) with (meth)acrylic acid and/or transesterification with (meth)acrylic ester,
(4) if appropriate, purification of the (meth)acrylated polyolefin wax obtained,

2. The process according to claim 1, wherein the olefin A) is selected from the group consisting of ethylene, propylene, 1-butene, isobutene, 1-pentene, 1-hexene and 1-octene.

3. The process according to claim 1 or 2, wherein the monomer B1) is a hydroxyalkyl alkenyl ether or hydroxyalkyl allyl ether of the formula (IV) 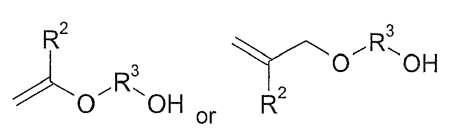 where
R² is hydrogen or methyl and
R³ is optionally aryl-, alkyl-, aryloxy-, alkyloxy-, heteroatom- and/or heterocycle-substituted C₂-C₂₀-alkylene, C₅-C₁₂-cycloalkylene or C₆-C₁₂-arylene or C₂-C₂₀-alkylene interrupted by one or more oxygen and/or sulfur atoms and/or one or more substituted or unsubstituted imino groups and/or one or more cycloalkyl, -(CO)-, -O(CO)O-, -(NH)(CO)O-, -O(CO)(NH)-, -O(CO)- or -(CO)O- groups.

4. The process according to claim 1 or 2, wherein the monomer B2) is a hydroxyalkyl (meth)acrylate or hydroxyalkyl(meth)acrylamide of the formula (V) 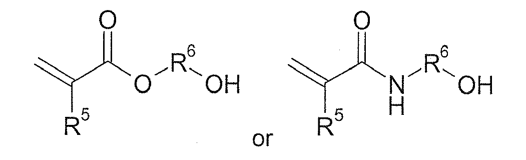 where
R⁵ is hydrogen or methyl and
R⁶ is optionally aryl-, alkyl-, aryloxy-, alkyloxy-, heteroatom- and/or heterocycle-substituted C₁-C₂₀-alkylene, C₅-C₁₂-cycloalkylene or C₆-C₁₂-arylene or C₂-C₂₀-alkylene interrupted by one or more oxygen and/or sulfur atoms and/or one or more substituted or unsubstituted imino groups and/or one or more cycloalkyl, -(CO)-, -O(CO)O-, -(NH)(CO)O-, -O(CO)(NH)-, -O(CO)- or -(CO)O- groups.

5. The process according to any of the preceding claims, wherein the monomer C) is selected from the group consisting of C₁-C₂₀-alkyl (meth)acrylates, vinyl esters of carboxylic acids comprising up to 20 carbon atoms, ethylenically unsaturated nitriles, vinyl ethers of alcohols comprising from 1 to 10 carbon atoms and α,β-unsaturated carboxylic acids and their anhydrides.

6. The process according to any of the preceding claims, wherein the enzymatic esterification or transesterification is
carried out in the presence of at least one polymerization inhibitor at 0 - 100°C and a reaction time of from 1 to 72 hours.

7. The process according to any of the preceding claims, wherein from 10 to 80% of the hydroxy functions comprised in the polyolefin wax bearing hydroxyalkyl groups are esterified or transesterified.

8. The process according to any of claims 1 to 6, wherein at least 80% of the hydroxy functions comprised in the polyolefin wax bearing hydroxyalkyl groups are esterified or transesterified.

9. The use of polyolefin waxes obtained according to any of claims 1 to 8 as dispersants for pigments, lubricants, in particular for PVC polymers, matting agents for surface coatings, surface-active agents for printing inks, leather coating, textile coating or in radiation-curable and/or thermally curable coating compositions.

10. A coating composition comprising (meth)acrylated polyolefin waxes obtained according to any of claims 1 to 8 plus the following components:
(G) at least one polymerizable compound having a plurality of copolymerizable, ethylenically unsaturated groups,
(H) if appropriate, reactive diluents,
(I) if appropriate, photoinitiator and
(J) if appropriate, further additives typical of surface coatings.

## Revendications

1. Procédé pour la préparation de cires de polyoléfine à fonction (méth)acryle, contenant, comme composants de structure formels, copolymérisés
a) 75 à 99,9% en mole d'au moins une α-oléfine de formule (I)
R¹-CH=CH₂,
où
R¹ signifie hydrogène ou alkyle en C₁-C₁₈, le cas échéant interrompu par un ou plusieurs atomes d'oxygène et/ou de soufre et/ou un ou plusieurs groupes imino substitués ou non substitués ;
b1) 0,1 à 15% en mole d'au moins un (méth)acrylate d'alcényloxyalkyle et/ou (méth)acrylate d'allyloxyalkyle et/ou
b2) 0,1 à 25% en mole d'au moins un (méth)acrylate de (méth)acryloyloxyalkyle et/ou (méth)acrylamide de (méth)acryloyloxyalkyle ainsi que
c) le cas échéant 0 à 25% en mole d'au moins un monomère différent de a), b1) et b2), portant au moins un groupe fonctionnel
à chaque fois sous forme copolymérisée,
comprenant les étapes suivantes :
(1) préparation d'une cire de polyoléfine par copolymérisation
A) d'au moins une oléfine de formule (I),
B1) d'au moins un hydroxyalkylalcényléther et/ou hydroxyalkylallyléther et/ou
B2) d'au moins un (méth)acrylate d'hydroxyalkyle et/ou (méth)acrylamide d'hydroxyalkyle ainsi que
C) le cas échéant d'au moins un monomère différent de A), B1) et B2), portant au moins un groupe fonctionnel,
(2) le cas échéant purification de la cire de polyoléfine obtenue,
(3) estérification de la cire de polyoléfine obtenue à partir de (1) ou (2) avec de l'acide (méth)acrylique et/ou transestérification avec un ester de l'acide (méth)acrylique,
(4) le cas échéant purification de la cire de polyoléfine à fonction (méth)acryle obtenue,
**caractérisée en ce qu'**on réalise l'estérification ou la transestérification en présence d'au moins une enzyme.

2. Procédé selon la revendication 1, **caractérisé en ce que** l'oléfine A) est choisie dans le groupe constitué par l'éthylène, le propylène, le 1-butène, l'isobutène, le 1-pentène, le 1-hexène et le 1-octène.

3. Procédé selon la revendication 1 ou 2, **caractérisé en ce que** le monomère B1) est un hydroxyalkylalcényléther ou un hydroxyalkylallyléther de formule (IV) 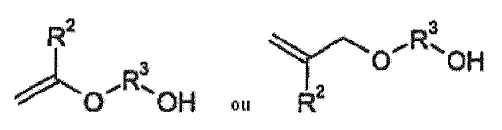 où
R² signifie hydrogène ou méthyle et
R³ signifie C₂-C₂₀-alkylène, C₅-C₁₂-cycloalkylène ou C₆- C₁₂-arylène le cas échéant substitué par aryle, alkyle, aryloxy, alkyloxy, des hétéroatomes et/ou des hétérocycles ou un groupe C₂-C₂₀-alkylène interrompu par un ou plusieurs atomes d'oxygène et/ou de soufre et/ou un ou plusieurs groupes imino substitués ou non substitué et/ou par un ou plusieurs groupes cycloalkyle, -(CO)-, -O(CO)O-, -(NH)(CO)O-, -O(CO)(NH)-, -O(CO)- ou -(CO)O-.

4. Procédé selon la revendication 1 ou 2, **caractérisé en ce que** le monomère B2) est un (méth)acrylate d'hydroxyalkyle ou un (méth)acrylamide d'hydroxyalkyle de formule (V) 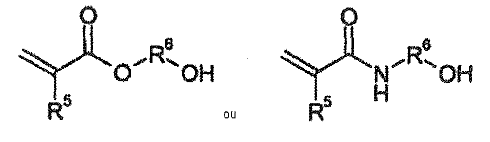 où
R⁵ signifie hydrogène ou méthyle et
R⁶ signifie C₁-C₂₀-alkylène, C₅-C₁₂-cycloalkylène ou C₆- C₁₂-arylène le cas échéant substitué par aryle, alkyle, aryloxy, alkyloxy, des hétéroatomes et/ou des hétérocycles ou un groupe C₂-C₂₀-alkylène interrompu par un ou plusieurs atomes d'oxygène et/ou de soufre et/ou un ou plusieurs groupes imino substitués ou non substitués et/ou par un ou plusieurs groupes cycloalkyle, -(CO)-, -O(CO)O-, -(NH)(CO)O-, -O(CO)(NH)-, -O(CO)- ou -(CO)O-.

5. Procédé selon l'une quelconque des revendications précédentes, **caractérisé en ce que** le monomère C) est choisi dans le groupe constitué par les (méth)acrylates de C₁-C₂₀-alkyle, les esters vinyliques d'acides carboxyliques contenant jusqu'à 20 atomes de carbone, les nitriles éthyléniquement insaturés, les vinyléthers d'alcools contenant 1 à 10 atomes de carbone et les acides carboxyliques α,β-insaturés et leurs anhydrides.

6. Procédé selon l'une quelconque des revendications précédentes, **caractérisé en ce qu'**on réalise l'estérification ou la transestérification enzymatique en présence d'au moins un inhibiteur de polymérisation à 0-100°C et un temps de réaction de 1-72 heures.

7. Procédé selon l'une quelconque des revendications précédentes, **caractérisé en ce qu'**on estérifie ou transestérifie 10 à 80% des fonctions hydroxy contenues dans la cire de polyoléfine portant les groupes hydroxyalkyle.

8. Procédé selon l'une quelconque des revendications 1 à 6, **caractérisé en ce qu'**on estérifie ou transestérifie au moins 80% des fonctions hydroxy contenues dans la cire de polyoléfine portant les groupes hydroxyalkyle.

9. Utilisation de cires de polyoléfine obtenues selon l'une quelconque des revendications 1 à 8 comme dispersant pour des pigments, des lubrifiants, en particulier pour les polymères en PVC, comme agents de matage pour la laque, agent tensioactif pour les encres d'imprimerie, revêtement de cuir, revêtement de textile ou dans les masses de revêtement durcissables par un rayonnement et/ou thermodurcissables.

10. Masse de revêtement contenant des cires de polyoléfine à fonction (méth)acryle obtenues selon l'une quelconque des revendications 1 à 8, ainsi que les composants suivants :
(G) au moins un composé polymérisable contenant plusieurs groupes copolymérisables, éthyléniquement insaturés,
(H) le cas échéant des diluants réactifs,
(I) le cas échéant des photo-initiateurs ainsi que
(J) le cas échéant d'autres additifs caractéristiques des laques.
